# EUROPÄISCHE PATENTSCHRIFT

(11) **EP 3 292 011 B1**
(45) Veröffentlichungstag und Bekanntmachung des Hinweises auf die Patenterteilung: **06.11.2019**
(21) Anmeldenummer: 16720417.1
(22) Anmeldetag: 03.05.2016
(51) Int. Cl.: B60J 5/04

(54) **TRÄGERVORRICHTUNG FÜR EIN KRAFTFAHRZEUG**
CARRIER DEVICE FOR A MOTOR VEHICLE
SYSTÈME DE SUPPORT DESTINÉ À UN VÉHICULE AUTOMOBILE

(30) Priorität: 05.05.2015 DE 102015005885; 10.09.2015 DE 102015217353
(43) Veröffentlichungstag der Anmeldung: 14.03.2018
(73) Patentinhaber: Brose Fahrzeugteile GmbH & Co. Kommanditgesellschaft, Bamberg, 96052 Bamberg (DE)
(72) Erfinder: THIENEL, Michael, 95349 Thurnau (DE); BERNERT, Michael, 96257 Redwitz (DE); FISCHER, Matthias, 96274 Itzgrund (DE); LEHNHARDT, André, 97483 Eltmann (DE); HÜMMER, Norman, 96250 Ebensfeld (DE); JAHN, Michael, 96148 Baunach (DE); HERZOG, Hans, 96129 Strullendorf (DE); HOFMANN, Gerhard, 96049 Bamberg (DE); ASCHMUTAT, Raimund, 96271 Grub am Forst (DE); STAMMBERGER, Werner, 96271 Grub a. Forst (DE)
(74) Vertreter: Maikowski & Ninnemann Patentanwälte Partnerschaft mbB
(86) Internationale Anmeldenummer: PCT/EP2016/059913
(87) Internationale Veröffentlichungsnummer: WO 2016/177742

(56) Entgegenhaltungen:
- EP-A2- 0 370 342
- DE-A1-102006 017 424
- DE-A1-102013 210 094
- DE-U1-202012 104 145

## Beschreibung

Die vorliegende Erfindung betrifft eine Trägervorrichtung nach dem Oberbegriff des Anspruchs 1 und ein Herstellungsverfahren nach dem Oberbegriff des Anspruchs 15.

Eine gattungsgemäße Trägervorrichtung für ein Kraftfahrzeug, wie sie zum Beispiel aus der EP 0 370 342 A2, der DE 10 2013 210 094 A1 oder der DE 10 2006 017 424 A1 bekannt ist, umfasst einen Basisträger, der zu einem wesentlichen Teil durch ein Organoblech gebildet ist und der sich entlang einer Hauptebene erstreckt. An einer solchen Trägervorrichtung und insbesondere ihrem Basisträger sind beispielsweise Funktionselemente festgelegt, wie z.B. bei einer Trägervorrichtung für eine Kraftfahrzeugtür Funktionselemente eines Fensterhebers oder eines Schlosses. Der Basisträger kann hierbei beispielsweise durch ein plattenförmiges Halbzeug ausgebildet sein, welches aus einem Organoblech besteht. Bei dem Organoblech handelt es sich um einen endlosfaserverstärkten thermoplastischen Kunststoff, bei dem Endlosfasern in Form von Gelegen, Geweben oder Gestricken aus Glas-, Kevlar-, Kohle- oder Kunststofffasern in eine Thermoplastische Matrix eingebettet sind. Als thermoplastischer Kunststoff für die Matrix eignet sich beispielsweise Polyamid aufgrund seiner guten Haftungseigenschaften zu den Fasern. Unter der Bezeichnung endlosfaserverstärkt ist zu verstehen, dass die Länge der der Verstärkung dienenden Fasern im Wesentlichen durch die Größe des plattenförmigen Organoblechs begrenzt ist. Innerhalb des Organoblechs ist somit eine Faser in der Regel nicht unterbrochen.

Dass der Basisträger zu einem wesentlichen Teil durch Organoblech gebildet ist, bedeutet dabei, dass das Organoblech denjenigen Teil des Basisträgers bildet, der den Großteil der unter normalen Betriebsbedingungen auftretenden Kräfte erfährt. Hierbei handelt es sich bei einem Basisträger für ein Türmodul einer Kraftfahrzeugtür beispielsweise um den Teil des Basisträgers, an dem eine oder mehrere Führungsschienen eines Fensterhebers vorgesehen sind. Ein (z.B. eine oder mehrere Führungsschienen tragender, zusammenhängender) Teil des Basisträgers aus Organoblech oder mehrere (z.B. eine oder mehrere Führungsschienen tragenden) Teile des Basisträgers aus Organoblech erstrecken sich beispielsweise über etwa 30% oder mehr der Fläche des Basisträgers.

Grundsätzlich kann sich das Organoblech somit über mehr als 30%, insbesondere über mehr als 40% und in der Regel über mindestens 50% der Fläche des Basisträgers erstrecken, sodass das Organoblech damit auch einen entsprechenden Anteil von mehr als 30%, insbesondere mehr als 40% oder etwa 50% oder mehr der Oberfläche des Basisträgers in der durch ihn definierten Hauptebene bildet. Um die Festigkeitsvorteile des Organoblechs voll zu nutzen, wird man in der Regel versuchen, den Anteil des Organoblechs an der Fläche des Basisträgers zu maximieren. Eine mehrteilige Ausbildung des Organoblechs an einem Basisträger ist hierbei nicht ausgeschlossen.

Ein Hauptbestandteil des Basisträgers ist beispielsweise ein plattenförmiges Halbzeug, welches aus einem Organoblech besteht. Somit definiert das Organoblech eine wesentliche flächige Ausdehnung des Basisträgers, kann aber durch weitere Komponenten bzw. Materialien ergänzt sein. So können beispielsweise metallische Elemente und/oder Kunststoffelemente in das Organoblech eingearbeitet oder an dem Organoblech angebracht sein.

Aufgrund der Zusammensetzung des Organoblechs des Basisträgers sind die Möglichkeiten, durch Umformungen dreidimensionale Strukturen hieran vorzusehen, begrenzt. Zum Beispiel können aufgrund der Endlosfaserverstärkung des Organoblechs lokal begrenzte Umformungen unerwünschte Auswirkungen auf Bereiche außerhalb des jeweils umgeformten Bereichs haben. So können sich durch eine lokale Umformung des Organoblechs entstandene Zugkräfte aufgrund der Fasern durch den Basisträger vergleichsweise weiträumig fortsetzen. Weiterhin sind die Möglichkeiten der 3-dimensionalen Strukturierung mittels Wärmeumformung bei einem Organoblech durch dessen Fließeigenschaften limitiert. Somit können auch durch Wärmeumformungen des Organoblechs dreidimensionale Strukturen nur in gewissen Grenzen eingearbeitet werden, bevor Schäden, wie zum Beispiel Risse, in dem Basisträger auftreten.

Der Erfindung liegt daher das Problem zugrunde, eine Trägervorrichtung zu schaffen, bei der dreidimensionale Strukturen vereinfacht und insbesondere weitestgehend ohne unerwünschte Belastungen der angrenzenden Bereiche an einem Organoblech eines Basisträgers ausgebildet werden können.

Diese Aufgabe wird sowohl mit einer Trägervorrichtung mit den Merkmalen des Anspruchs 1 als auch mit einem Herstellungsverfahren mit den Merkmalen des Anspruchs 15 gelöst.

Bei einer erfindungsgemäßen Trägervorrichtung weist der Basisträger wenigstens eine Auftrennung auf, an der ein Materialbereich unter Bildung wenigstens eines Freiraums aus der Hauptebene herausgeformt ist. Hierdurch ist wenigstens ein Abschnitt des herausgeformten Materialbereich von einem angrenzenden Bereich des Basisträgers beabstandet. Der durch die Herausformung des Materialbereichs gebildete wenigstens eine Freiraum ist zumindest teilweise derart mit einer Anspritzung aus thermoplastischem Kunststoffmaterial oder mit einer Anspritzung aus thermoplastischem Kunststoffmaterial und einem separaten Einsatzelement gefüllt, dass ein Abschnitt des herausgeformten Materialbereichs und der angrenzende Bereich des Basisträgers hierüber miteinander verbunden sind.

Grundgedanke der Erfindung ist demgemäß, in einfacher Weise und dem jeweiligen Bedarf anpassbare dreidimensionale Strukturen in einem Basisträger auszubilden, der zu einem wesentlichen Teil aus einem Organoblech gebildet ist, indem hieran Material aufgetrennt und ein Materialbereich aus der von dem Basisträger aufgespannten Hauptebene herausgeformt wird, sodass der Materialbereich zumindest teilweise von der Hauptebene vorsteht. Insbesondere zur einfachen Stabilisierung des Materialbereichs und/oder der Versteifung der hiermit definierten dreidimensionalen Struktur ist ein an der Auftrennung entstandener Freiraum zumindest teilweise mit einer Anspritzungen aus thermoplastischem Kunststoffmaterial oder mit einer Anspritzung aus thermoplastischem Kunststoffmaterial einem separaten Einsatzelement gefüllt. Insbesondere kann hierdurch eine Strukturierung geschaffen werden, welche bei einer bloßen Umformung des Organoblechs des Basisträgers nicht ohne weiteres möglich ist und beispielsweise zu ungewollten Spannungen oder Verformungen und/oder Rissen in dem Basisträger führt. Bei der erfindungsgemäßen Lösung bleibt ein an den herausgeformten Materialbereich angrenzender Bereich des Basisträgers durch die Herausformung weitestgehend unbeeinflusst, auch wenn der Materialbereich beispielsweise aus der Hauptebene heraus gepresst, gedrückt, gezogen und/oder gefaltet wird.

Durch die Auftrennung ist das Material des Basisträgers in einem ursprünglich durchgängigen Bereich aufgetrennt, beispielsweise (ein-)geschnitten. Hierdurch ist ein Materialbereich gezielt verformbar, an dem zumindest in dem aufgetrennten Abschnitt keine stoffschlüssige Verbindung mehr zwischen den angrenzenden Rändern der Auftrennung besteht. Durch die Auftrennung entstehen voneinander getrennte Bereiche, die gezielt und weitestgehend unabhängig voneinander durch Verformung gestaltet werden können, zum Beispiel durch Biegen und/oder Falten von Material des Basisträgers, insbesondere um einen aus der Hauptebene vorstehenden Materialbereich an dem Basisträger auszubilden. Die Auftrennung kann hierbei in unterschiedlichsten Formen ausgeführt sein. Insbesondere kann die Auftrennung linienartig ausgeführt sein, so dass hierüber der Materialbereich entlang einer gerade, wellenförmig oder rechtwinklig verlaufenden Linien freiliegt.

Der eine dreidimensionale Struktur an dem Basisträger (mit-) definierende Materialbereich ist nach dem Anbringen der Auftrennung aus der Hauptebene herausgeformt. Die anschließende zumindest teilweise Füllung eines durch die Herausformung entstandenen Freiraums mit thermoplastischem Kunststoffmaterial und/oder einem separat hergestellten Einsatzelement dient dabei zum Beispiel der Stabilisierung der Ausformung und der damit definierten dreidimensionalen Struktur und/oder einer Abdichtung, sodass durch den Freiraum keine Feuchtigkeit gelangen kann. Letzteres ist insbesondere bei einer Trägervorrichtung für eine Kraftfahrzeugtür von Vorteil, bei der mittels des Basisträgers ein Nassraum von einem Trockenraum getrennt werden soll. Gemäß einer Ausgestaltung ist der Freiraum durch die Anspritzungen aus thermoplastischem Kunststoffmaterial oder durch die Anspritzung aus thermoplastischem Kunststoffmaterial und das separate Einsatzelement somit dichtend verschlossen. Der wenigstens eine Freiraum kann somit durch die Anspritzungen und/oder das separate Einsatzelement derart dichtend verschlossen sein, dass eine Nass-Trockenraumtrennung mittels des Basisträgers bei einer Trägervorrichtung für eine Kraftfahrzeugtür nicht beeinträchtigt ist.

Eine erfindungsgemäße Trägervorrichtung kann in unterschiedlichen Systemen eines Kraftfahrzeugs eingesetzt sein. Beispielsweise kann eine Trägervorrichtung Teil einer modular aufgebauten Kraftfahrzeugtür, insbesondere eines Türmoduls, oder Teil eines Kraftfahrzeugsitzes oder Teil eines Kühlerlüftersystems sein. Ein Basisträger, an dem der Materialbereich im Bereich einer Auftrennung eines Organoblechs ausgebildet ist, erstreckt sich hierbei vorzugsweise flächig in der Hauptebene. Insbesondere in Abhängigkeit vom Verwendungszweck können zusätzliche Anspritzungen aus thermoplastischem Kunststoffmaterial an dem Basisträger vorgesehen sein.

Allgemein sind Anspritzungen aus thermoplastischem Kunststoffmaterial derart ausgeführt, dass das thermoplastische Kunststoffmaterial wenigstens stoffschlüssig mit dem Basisträger verbunden ist. Eine Anspritzung kann aber auch formschlüssig mit dem Basisträger verbunden sein. Durch eine Anspritzung kann zum Beispiel auch ein Abschnitt des Basisträgers mit thermoplastischem Kunststoffmaterial umgeben und/oder eingehüllt sein. Eine Anspritzung kann sich auch durch den Basisträger hindurch erstrecken. Beispielsweise kann die Anspritzungen mittels einer sogenannten Durchspritzung ausgebildet sein, bei der das thermoplastische Kunststoffmaterial durch den Basisträger, insbesondere durch das Organoblech hindurchgespritzt ist. Dies schließt insbesondere eine Variante ein, bei der thermoplastisches Kunststoffmaterial zwischen den Fasern des Organoblechs hindurchgepresst wird.

Das thermoplastische Kunststoffmaterial kann beispielsweise Polypropylen aufweisen.

In einer Ausführungsvariante begrenzen wenigstens zwei voneinander beabstandete Ränder den wenigstens einen Freiraum, der durch an der Auftrennung und durch das Herausformen des Materialbereichs gebildet ist. Einer der zwei Ränder kann hierbei dem herausgeformten Materialbereich zugeordnet sein und der andere Rand dem angrenzenden Bereich des Basisträgers. Zum Beispiel bildet die wenigstens eine Auftrennung an dem Basisträger wenigstens zwei benachbarte Ränder aus, die wenigstens quer zur Hauptebene voneinander beabstandet sind. Diese Ränder beranden den nachträglich zumindest teilweise geschlossenen Freiraum. Ein Rand der Auftrennung bildet hier somit auch einen Rand des Materialbereichs aus, der aus der Hauptebene herausgeformt ist.

In einer Ausführungsvariante ist ein Rand des wenigstens einen Freiraums durch einen Faltrand gebildet. Ein solcher Faltrand entsteht durch (Um-) Biegen oder (Um-) Falten eines Basisträgerabschnitts, der am Ende einen Teil des herausgeformten Materialbereichs bildet. Der Faltrand ist zum Beispiel dadurch gebildet, dass ein Basisträgerabschnitt, der letztendlich einen Abschnitt des herausgeformten Materialbereichs bildet, nachträglich, d.h., nach dem Anbringen der Auftrennung, mindestens einmal aus der Hauptebene heraus gefaltet wird.

Alternativ oder ergänzend kann der Freiraum wenigstens durch zwei voneinander beabstandete Ränder begrenzt sein, die jeweils von der Hauptebene beabstandet sind, und zwar wenigstens in einer Richtung quer zur Hauptebene.

Die Anspritzung aus thermoplastischem Kunststoffmaterial und/oder das Einsatzelement können den wenigstens einen Freiraum derart füllen, dass die wenigstens zwei Ränder des wenigstens einen Freiraums zumindest abschnittsweise miteinander verbunden sind. Derart sind wenigstens zwei Ränder des wenigstens einen Freiraums durch die Anspritzung aus thermoplastischem Kunststoffmaterial und/oder durch das separate Einsatzelement in ihrer Position relativ zueinander stabilisiert. Dies ist bei einer Lösung nicht zwingend, bei der lediglich der herausgeformte Materialbereich und der hieran angrenzende Bereich (irgendwie) über das angespritzte Kunststoffmaterial und/oder das Einsatzelement miteinander verbunden sind und damit vor allem der herausformte Materialbereich an sich in seiner Position stabilisiert ist.

Weiterhin kann die Anspritzung aus thermoplastischem Kunststoffmaterial derart ausgebildet sein, dass die zwei voneinander beabstandeten Ränder zumindest teilweise von thermoplastischem Kunststoffmaterial umspritzt sind, also ein Rand jeweils von angespritztem Kunststoffmaterial umgriffen ist. Hiermit kann die Verbindung der Anspritzungen mit dem Basisträger verbessert sein.

In einer Ausführungsvariante ist die wenigstens eine Auftrennung durch Walzen, Pressen, Schneiden, Stanzen, Tiefziehen und/oder Stempeln in dem Basisträger ausgebildet. Die Form der Auftrennung kann dabei je nach Ausgestaltungsvariante und gewünschten Form des herauszuformenden Materialbereichs angepasst sein. Beispielsweise kann die Auftrennung geradlinig oder gekrümmt verlaufend ausgebildet sein. Die Auftrennung kann ferner für einen zu faltenden Materialbereich ausgebildet sein. So kann der Materialbereich mehrfach gefaltet worden sein, um bestimmungsgemäß aus der Hauptebene hervor zu stehen.

In einem Ausführungsbeispiel ist die Auftrennung an einem äußeren Rand des Basisträgers vorgesehen. Mit anderen Worten kann die Auftrennung wenigstens eine Verbindungsstelle mit dem Rand des Basisträgers aufweisen oder in einen Rand des Basisträgers übergehen. Eine Auftrennung kann aber auch beabstandet von dem äußeren Rand des Basisträgers angeordnet sein. Hierfür ist die Auftrennung dann in einem innen liegenden Bereich des Basisträgers vorgesehen.

In einem Ausführungsbeispiel ist wenigstens eine Schnittstelle zur Anbindung und/oder Abstützung wenigstens eines an der Trägervorrichtung festzulegenden Funktionselements durch den herausgeformten Materialbereich und insbesondere durch die Anspritzung und/oder das separate Einsatzelement ausgebildet. Beispielsweise kann durch die Anspritzung und/oder das separate Einsatzelement eine Lagerstelle oder eine Schnittstelle für ein Element einer Antriebsvorrichtung, für ein Versteifungselement, für ein Crash- oder Deformationselement, für ein Element einer Führungsvorrichtung und/oder für ein Element einer Verriegelungsvorrichtung ausgebildet sein. Weiterhin kann durch die Anspritzung und/oder das separate Einsatzelement selbst mindestens ein Funktionselement, wie zum Beispiel ein Versteifungselement, ein Crash- oder Deformationselement, ein Element einer Führungsvorrichtung und/oder ein Element einer Verriegelungsvorrichtung ausgebildet sein. So ist in einem Ausführungsbeispiel durch die Anspritzungen ein Deformationselement der Trägervorrichtung ausgebildet. Unter einem Deformationselement wird hierbei ein Element verstanden, dass eine auf die Trägervorrichtung wirkende Kraft gezielt unter Deformation des Deformationselements wenigstens teilweise abbaut.

Nach einer weiteren Variante kann durch die Anspritzung eine Versteifung ausgebildet sein, welche sich zwischen dem aus dem Organoblech herausgeformten Materialbereich und dem angrenzenden Bereich des Basisträgers erstreckt. Beispielsweise kann die Versteifung als Versteifungsrippe ausgeführt sein. In einer Weiterbildung stützt die Versteifung den herausgeformten Materialbereich gegen den angrenzenden Bereich des Basisträgers ab.

In einer Ausführungsvariante überdeckt die Anspritzung und/oder das separate Einsatzelement zumindest eine Oberfläche des herausgeformten Materialbereichs vollständig. Beispielsweise kann ein Bereich zwischen dem Materialbereich und der Hauptebene vollständig durch die Anspritzung und/oder das separate Einsatzelement ausgefüllt sein. Weiterhin kann auch ein Bereich zwischen dem herausgeformten Materialbereich und einer Erstreckungsebene, entlang der sich der Basisträgerabschnitt, der den herausgeformten Materialbereich bildet, vor der Herausformung erstreckte, vollständig durch die Anspritzung und/oder das separate Einsatzelement ausgefüllt sein. Vorzugsweise erstreckt sich angespritztes thermoplastisches Kunststoffmaterial vollständig über eine durch die Herausformung gebildete und den wenigstens einen Freiraum zumindest teilweise berandete Wandung und füllt den Freiraum hierdurch teilweise oder vollständig aus.

Das separate Einsatzelement kann aus einem metallischen Werkstoff, insbesondere aus Leichtmetall oder Blech hergestellt sein. In einer Variante ist ein separates Einsatzelement mit dem Basisträger durch Kleben, Ultraschallschweißen, Nieten, Schrauben und/oder angespritztes Kunststoffmaterial verbunden sein.

Weiterhin kann vorgesehen sein, dass in dem Basisträgermaterial und insbesondere dessen Organoblech mehrere Auftrennungen vorgesehen werden, um einen oder mehrere Materialbereiche aus der Hauptebene herauszuformen und gewünschte dreidimensionale Strukturen an dem Basisträger auszubilden. Insbesondere können wenigstens zwei Auftrennungen in dem Basisträger hergestellt sein, sodass mehrere (mindestens zwei) Materialbereiche in erfindungsgemäßer Weise aus der Hauptebene herausgeformt sind.

Gemäß einer weiteren Variante grenzt der herausgeformte Materialbereich an mehrere Auftrennungen an, die in aufeinanderfolgenden Arbeitsschritten an dem Organoblech-Basisträger hergestellt wurden. Insbesondere kann hier ein Freiraum durch mehrere Auftrennungen gebildet sein, an die der Materialbereich angrenzt. In einer Ausführungsvariante grenzt der Materialbereich zum Beispiel an wenigstens zwei zueinander beabstandete Auftrennungen an und ist unter Bildung wenigstens zweier Freiräume aus der Hauptebene herausgeformt. In einer Weiterbildung sind die wenigstens zwei Auftrennungen hierbei zueinander parallel verlaufend angeordnet. Weiterhin können die zwei Freiräume zumindest teilweise mit einer Anspritzung aus thermoplastischem Kunststoffmaterial und/oder einem separaten Einsatzelement gefüllt und hierüber zumindest teilweise verbunden sein.

In einer Ausführungsvariante ist in dem Basisträger ein Kanal ausgebildet und der aus der Hauptebene herausgeformte Materialbereich ist im Bereich dieses Kanals angeordnet. Hierbei bildet beispielsweise ein Abschnitt des Basisträgers, der nach der Auftrennung des Basisträgermaterials für die Herausformung des aus der Hauptebene vorstehenden Materialbereichs genutzt wird, einen Teil eines einseitig offenen Kanals. Der herausgeformte Materialbereich liegt dann am Ende des Herstellungsprozesses für die Trägervorrichtung gegenüber angrenzenden Bereichen des Kanals vertieft oder vorstehend an dem Basisträger vor.

Unabhängig von der Anordnung im Bereich eines Kanals kann der Materialbereich derart (auf einer Seite des Basisträgers) aus der Hauptebene herausgeformt sein, dass hierüber eine laschenartige oder taschenartige Struktur gebildet ist.

In einer Ausführungsvariante ist wenigstens ein Strukturelement an dem Basisträger ausgebildet. Unter einem Strukturelement wird generell ein nicht ebener Abschnitt des Basisträgers verstanden, insbesondere eine an dem Organoblech des Basisträgers ausgebildete Erhebung oder Vertiefung. Ein Strukturelement kann hierbei durch den herausgeformten Materialbereich und/oder einen daran angrenzenden Bereich des Basisträgers ausgebildet sein. Bei dem angrenzenden Bereich kann es sich insbesondere um denjenigen Bereich des Basisträgers handeln, der an die Auftrennung angrenzt und der über den Freiraum zu dem herausgeformten Materialbereich beabstandet ist, insbesondere in einer vom der Hauptebene des Basisträgers verschiedenen Ebene liegt. Bei einem Strukturelement des Basisträgers kann es sich aber auch um einen Basisträgerabschnitt handeln, der ohne vorherige definierte Auftrennung an dem Basisträger umgeformt ist. Beim einem der Erfindung entsprechenden Grad des Umformungsprozesses des Organoblechs entstehen "undefinierte" oder (besser ausgedrückt) unbestimmte Auftrennung, die wiederum Freiräume für thermoplastische Anspritzungen bilden. So können beispielsweise bei dieser Erfindungsvariante mehrere aneinander angrenzende Strukturelemente des Basisträgers die gleiche geometrische Form aufweisen oder zumindest teilweise geometrisch verschieden ausgestaltet sein. Zum Beispiel kann ein Strukturelement eine Zylinder-, Pyramiden-, Pyramidenstumpf- oder Prismenform aufweisen.

In einer Weiterbildung können mehrere Strukturelemente derart angeordnet sein, dass sie einen Bereich des Basisträgers ausbilden, der dazu eingerichtet und vorgesehen ist, die Steifigkeit der Trägervorrichtung gezielt zu beeinflussen und/oder eine auf die Trägervorrichtung wirkende Kraft abzubauen und dadurch einem Versagen der Trägervorrichtung entgegenzuwirken. Geschieht dies unter elastischer oder plastischer Verformung, ist hierüber auch gleichzeitig ein energieabsorbierendes Deformationselement definiert. Beispielsweise sind eine Vielzahl periodisch oder nach einem vorgegeben Muster angeordnete Strukturelemente vorgesehen, um die Steifigkeit der Trägervorrichtung gezielt zu beeinflussen und/oder um eine auf die Trägervorrichtung wirkende mechanische Energie abzubauen, und somit einem Versagen der Trägervorrichtung entgegenzuwirken.

In einer Ausführungsvariante können die Strukturelemente im Querschnitt eine identische äußere Kontur aufweisen. In einer alternativen Variante können sich die äußeren Konturen der Strukturelemente hinsichtlich Form und Größe voneinander unterscheiden, um den lokal unterschiedlichen mechanischen Anforderungen an den Modulträger Rechnung zu tragen. Es ist weiterhin möglich, dass mehrere unterschiedlich oder identisch ausgebildete Strukturelemente beispielsweise in geraden, geschwungenen oder gewellten Reihen neben- oder hintereinander angeordnet sind. In einer Ausführungsvariante sind mehrere Strukturelemente entlang zwei zueinander senkrechter Raumrichtungen nebeneinander oder entlang einer Umfangslinie eines Kreises oder einer Ellipse hintereinander angeordnet.

In einer Ausführungsvariante können zwei unterschiedlich definierte Strukturelemente (d.h., Strukturelemente eines ersten Typs, die durch einen herausgeformten Materialbereich im Bereich einer Auftrennung, und Strukturelement eines zweiten Typs, die durch einen hieran angrenzenden Bereich des Basisträgers gebildet sind) abwechselnd entlang einer Erstreckungsrichtung hintereinander angeordnet und jeweils durch eine Auftrennung voneinander getrennt sein. Beispielsweise können im Bereich eines Kanals des Basisträgers mehrere Materialbereiche nach einer der oben beschriebenen Varianten herausgeformt sein und jeweils ein Strukturelement ausbilden. Diese Strukturelemente (des ersten Typs) trennen dann Teilstücke des Kanals voneinander, die selbst Strukturelemente (des zweiten Typs) darstellen.

Gemäß einer Ausführungsvariante können zwei Strukturelemente jeweils an einen Rand einer Auftrennung angrenzen, wobei die zwei Ränder der Auftrennung voneinander beabstandete Ränder des wenigstens einen Freiraums bilden und wenigstens quer zur Hauptebene voneinander beabstandet sind. Die beiden Strukturelemente definieren dabei zusammen eine Erstreckungsrichtung, entlang welcher sie hintereinander angeordnet sind. Eine Anspritzung aus thermoplastischem Kunststoffmaterial verbindet hier die beiden Strukturelemente derartig miteinander, dass sie den Freiraum zumindest teilweise ausfüllt und wenigstens stoffschlüssig mit den beiden Strukturelementen verbunden ist. Hierbei kann sich die Anspritzung entlang der Erstreckungsrichtung von dem Freiraum aus weg in das jeweilige Strukturelement hinein erstrecken. Sie erstreckt sich hierbei bevorzugt jeweils wenigstens so weit in das jeweilige Strukturelement hinein, dass die Ausdehnung der Anspritzung entlang der Erstreckungsrichtung in dem jeweiligen Strukturelement wenigstens 25% der Ausdehnung des jeweiligen Strukturelements selbst entlang der Erstreckungsrichtung entspricht.

Gemäß einem weiteren Aspekt der Erfindung wird ein Verfahren zur Herstellung einer Trägervorrichtung für Funktionselemente eines Kraftfahrzeugs vorgeschlagen.

Bei dem erfindungsgemäßen Verfahren wird wenigstens ein Basisträger, der zu einem wesentlichen Teil durch ein Organoblech gebildet ist und der sich entlang einer Hauptebene erstreckt, bereitgestellt. Der Basisträger kann hierbei bereits Ausformungen aufweisen, beispielsweise in Form von Aussparungen oder Erhebungen. Es kann sich in einer Ausführungsvariante um einen Organoblechrohling handeln, welcher bereits durch Zuschnitt eine gewünschte Randkontur aufweist und durch eine gewisse Vorverformung in eine gewünschte Form gebracht wurde. Gegebenenfalls sind an dem Organoblechrohling auch bereits Funktionselemente (z.B. Versteifungsstrukturen) vorstrukturiert.

Gemäß dem erfindungsgemäßen Verfahren wird
- in dem Basisträger wenigstens eine Auftrennung ausgebildet,
- an der Auftrennung ein Materialbereich unter Bildung wenigstens eines Freiraums aus der Hauptebene herausgeformt, sodass der herausgeformte Materialbereich mit wenigstens einem Abschnitt zu einem angrenzenden Bereich des Basisträgers beabstandet ist, und
- der wenigstens eine Freiraum zumindest teilweise derart mit einer Anspritzung aus thermoplastischem Kunststoffmaterial oder mit einer Anspritzung aus thermoplastischem Kunststoffmaterial und einem separaten Einsatzelement gefüllt, dass der Abschnitt des herausgeformten Materialbereichs und der angrenzende Bereich hierüber miteinander verbunden sind.

Das Herausformen des Materialbereichs aus der Hauptebene kann insbesondere ein Umformen, vorzugsweise ein Warmumformen eines Abschnitts des Basisträgers und/oder mindestens ein Falten eines Abschnitts des Basisträgers einschließen. Hierbei ist der umgeformte und/oder mindestens einfach gefaltete Abschnitt des Basisträgers vorzugsweise aus dem Organoblech gebildet.

Gemäß einer weiteren Ausführungsvariante können bei dem Verfahren wenigstens zwei Auftrennungen in dem Basisträger ausgebildet werden, wobei mindestens zwei zueinander räumliche beabstandete Materialbereiche aus der Hauptebene herausgeformt werden.

Weiterhin können mehrere (wenigstens zwei) Auftrennungen in dem Basisträger ausgebildet werden, an die der Materialbereich angrenzt und an denen der Materialbereich unter Bildung wenigstens eines Freiraums oder mehrerer Freiräume aus der Hauptebene herausgeformt wird.

Mit einem erfindungsgemäßen Verfahren kann eine erfindungsgemäße Trägervorrichtung herstellbar sein, so dass Merkmale und Vorteile der erfindungsgemäßen Trägervorrichtung und der vorstehend und nachstehend hierfür erläuterten Ausführungsbeispiele auch für Ausführungsvarianten eines erfindungsgemäßen Herstellungsverfahren gelten und umgekehrt.

Weitere Vorteile und Merkmale der Erfindung werden bei der nachfolgenden Beschreibung von Ausführungsbeispielen anhand der Figuren deutlich werden.

Hierbei zeigen:
- Figur 1: ausschnittsweise ein Ausführungsbeispiel eines Basisträgers für eine erfindungsgemäße Trägervorrichtung mit einer Auftrennung;
- Figur 2: ausschnittsweise ein Ausführungsbeispiel eines Basisträgers für eine erfindungsgemäße Trägervorrichtung mit dreiecksförmig herausgeformten Materialbereichen;
- Figur 3: ausschnittsweise ein Ausführungsbeispiel eines Basisträgers für eine erfindungsgemäße Trägervorrichtung mit einem randseitig angeordneten laschenartig herausgeformten Materialbereich;
- Figur 4: ausschnittsweise ein Ausführungsbeispiel eines Basisträgers für eine erfindungsgemäße Trägervorrichtung mit einem prismenförmigen Strukturelement;
- Figur 5A: ausschnittsweise ein Ausführungsbeispiel eines Basisträgers für eine erfindungsgemäße Trägervorrichtung mit einem zylinderförmigen Strukturelement;
- Figur 5B: ausschnittsweise ein Ausführungsbeispiel eines Basisträgers für eine erfindungsgemäße Trägervorrichtung mit einem zylinderförmigen Strukturelement und eingestecktem Einsatzelement;
- Figur 6: ausschnittsweise ein Ausführungsbeispiel eines Basisträgers für eine erfindungsgemäße Trägervorrichtung mit zwei vorstehenden Strukturelementen;
- Figur 6A: das Ausführungsbeispiel der Figur 6 im Querschnitt entlang einer in der Figur 6 ersichtlichen Schnittlinie A-A;
- Figur 6B: das Ausführungsbeispiel der Figur 6 im Querschnitt entlang einer in der Figur 6 ersichtlichen Schnittlinie B-B;
- Figur 7: ausschnittsweise ein Ausführungsbeispiel eines Basisträgers für eine erfindungsgemäße Trägervorrichtung mit einem am Basisträger festgelegtem Einsatzelement;
- Figur 8: ausschnittsweise ein Ausführungsbeispiel eines Basisträgers für eine erfindungsgemäße Trägervorrichtung mit Reihen systematisch angeordneter Strukturelementen;
- Figur 9A: in vergrößertem Maßstab eine Variante eines pyramidenstumpfförmigen Strukturelements;
- Figur 9B: in vergrößertem Maßstab eine Variante eines pyramidenförmigen Strukturelements;
- Figur 10: exemplarisch eine mögliche Ausführungsform für eine erfindungsgemäße Trägervorrichtung;
- Figuren 11 A und 11 B: eine Ausführungsvariante eines erfindungsgemäßen Basisträgers für ein Türmodul einer Kraftfahrzeugtür mit Blick auf eine Außen- und eine Innenseite des Basisträgers;
- Figuren 12 A bis 12 B: vergrößerte Ausschnitte des Organoblechs des Basisträgers der Figuren 11A bis 11B;
- Figuren 12 C bis 12D: die in den Figuren 12A und 12B dargestellten Bereiche des Organoblechs mit hieran vorgesehenen Anspritzungen aus thermoplastischem Kunststoffmaterial;
- Figur 13A: einen vergrößerten Ausschnitt des Organoblechs des Basisträgers der Figuren 11A bis 11B mit Blick auf einen unteren Bereich für eine an dem Basisträger vorgesehene Führungsschiene;
- Figur 13B: in mit der Figur 13A übereinstimmender Ansicht den Basisträger mit an das Organoblech angespritztem thermoplastischen Kunststoffmaterial.

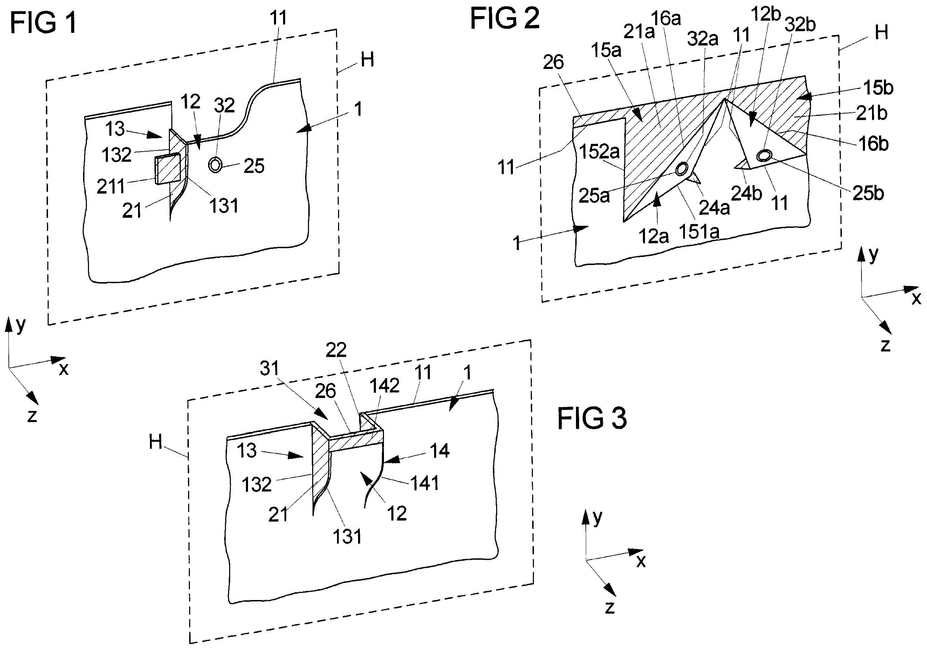

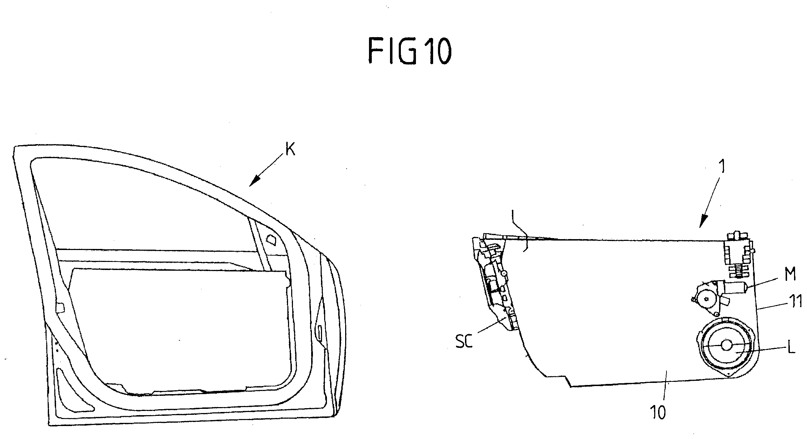

In den Figuren 1 bis 9B sind jeweils ausschnittsweise Ausführungsbeispiele für Basisträger 1 einer erfindungsgemäßen Trägervorrichtung dargestellt. Der Basisträger 1 erstreckt sich dabei jeweils entlang einer Hauptebene H und ist von einem äußeren Rand 11 umgeben. Beispielsweise kann die Hauptebene H identisch sein mit einer Erstreckungsebene eines unverarbeiteten Organoblechrohlings, aus welchem der Basisträger 1 geformt wird. Eine mögliche Variante für eine erfindungsgemäße Trägervorrichtung ist in der Figur 10 dargestellt. Hier wird eine Trägervorrichtung durch ein Türmodul T für eine Kraftfahrzeugtür K gebildet, an dessen flächigem, eine in der Hauptebene H liegende Trägerfläche 10 aufspannenden Basisträger 1 eine Vielzahl von Funktionselementen, wie z.B. Teile eines Fensterhebers (wie ein Antriebsmotor M), eines Schlosses SC oder ein Laufsprecher L angeordnet sind.

Eine Querrichtung z ist durch die Richtung senkrecht zur Hauptebene H definiert. Durch die Hauptebene H sind des Weiteren eine vertikal verlaufende Vertikalrichtung y und eine horizontal verlaufende Horizontalrichtung x definiert, die senkrecht zueinander und senkrecht zur Querrichtung z stehen. Im Folgenden sind die drei Richtungen jeweils durch ein Koordinatenkreuz in den Figuren gekennzeichnet. Es ist zu verstehen, dass die drei Richtungen hier nur hilfsweise zum besseren Verständnis angegeben sind, sie dienen vor allem zur Herstellung von relativen Bezügen.

In den folgenden Figuren ist thermoplastisches Kunststoffmaterial, das an dem Basisträger 1 festgelegt wurde, durch eine Schraffur gekennzeichnet, sofern dies nicht anderweitig erläutert ist.

In Figur 1 ist eine erste Ausführungsvariante einer erfindungsgemäßen Trägervorrichtung in einem Ausschnitt dargestellt. In dem flächigen und hier vergleichsweise dünnwandigen Basisträger 1 ist eine Auftrennung angeordnet, welche mit einem Bereich des äußeren Rands 11 des Basisträgers 1 verbunden ist. Die Auftrennung verläuft hierbei im Wesentlichen senkrecht zu dem äußeren Rand 11 entlang der Vertikalrichtung y. Der Bereich des äußeren Rands 11 verläuft im Wesentlichen entlang der Horizontalrichtung x.

Die Auftrennung, welche beispielsweise durch Einschneiden des Basisträgers 1 gebildet wurde, definiert zwei Ränder 131, 132. Der erste Rand 131 bildet einen Rand eines Materialbereichs 12 aus. Der Materialbereich 12 ist aus der Hauptebene H herausgeformt. Der zweite Rand 132 liegt in der Hauptebene H und ist somit von dem ersten Rand 131 beabstandet.

Der Materialbereich 12 ist randseitig angeordnet und weist neben dem ersten Rand 131 der Auftrennung einen zweiten Rand auf, der durch einen Abschnitt des äußeren Randes 11 des Basisträgers 1 ausgebildet ist. An den übrigen Seiten geht der Materialbereich 12 fließend in Bereiche des Basisträgers 1 über, die sich in der Hauptebene H erstrecken.

Durch die Herausformung des Materialbereiches 12 aus der Hauptebene H ist der erste Rand 131 der Auftrennung gekrümmt und entlang der Querrichtung z und entlang der Horizontalrichtung x von dem zweiten Rand 132 beabstandet. Weiterhin ist durch die Krümmung die Ausdehnung des ersten Randes 131 entlang der Vertikalrichtung y kleiner als die des zweiten Randes 132. Hierdurch ist der Abschnitt des äußere Rands 11, der im Bereich des Materialbereichs 12 angeordnet ist, entlang der Vertikalrichtung y von dem horizontal verlaufenden Bereich des äußeren Rands 11 beabstandet, der außerhalb des Materialbereichs 12 liegt.

Zur Ausbildung des aus der Hauptebene H vorstehenden Materialbereichs 12 wurde somit das Organoblech des Basisträgers 1 im Bereich der Auftrennung umgeformt. Die freien Ränder des herausgeformten Materialbereichs 12 weisen dabei einen S-förmigen Verlauf auf. Mit dem herausgeformten Materialbereich 12 ist derart eine laschenartige Struktur an dem Organoblech-Basisträger 1 ausgebildet.

Zwischen den beiden Rändern 131 und 132 der Auftrennung besteht ein Freiraum 13, der zumindest teilweise durch eine Anspritzung 21 aus thermoplastischem Kunststoffmaterial ausgefüllt ist. Eine von den Rändern 131 und 132 definierte Grundfläche des Freiraums 13 verläuft bezogen auf die Querrichtung z leicht schräg zwischen den beiden Rändern 131 und 132 der Auftrennung. Sie steht somit nicht senkrecht auf der Hauptebene H. Die Anspritzung 21 ist derart in dem Freiraum angeordnet, dass eine schräg verlaufende stirnseitige Wand den ersten Rand 131 der Auftrennung mit einem Abschnitt des zweiten Randes 132 Auftrennung verbindet. Der verbundene Abschnitt des zweiten Randes 132 liegt hier dem ersten Rand 131 entlang der Vertikalrichtung y gegenüber. An der von der Anspritzung 21 abgewandten Seite geht der Materialbereich 12 kontinuierlich in die Hauptebene H über.

An die den Freiraum zwischen den Rändern 131, 132 auffüllende Anspritzung 21 ist ein Formschlusselement 211 angeformt oder hierdurch ausgebildet. Das Formschlusselement 211 ist vorliegend als quaderförmiger Fortsatz aus thermoplastischem Kunststoffmaterial ausgebildet. Das Formschlusselement 211 definiert eine Schnittstelle zur Anbindung und/oder Abstützung eines Funktionselements. Beispielsweise kann hierüber ein Funktionselement an den Basisträger 1 steckbar sein. Im Bereich der Anspritzungen 21 kann alternativ oder ergänzend auch ein Funktionselement, wie zum Beispiel ein Umlenkstück für einen Seilzugfensterheber, vorgegeben und insbesondere durch die Anspritzungen 21 selbst ausgebildet sein.

Vorliegend ist des Weiteren an dem Materialbereich 12 eine zusätzliche Schnittstelle 32 ausgebildet, die aus einer Öffnung in dem Basisträger 1 und einer Anspritzungen 25 aus thermoplastischem Kunststoffmaterial am Rand der Öffnung besteht. Die Schnittstelle 32 kann beispielsweise für die Festlegung eines Funktionselements an dem Basisträger 1 eingerichtet und vorgesehen sein. Demgemäß bildet in der dargestellten Ausführungsvariante der Materialbereich 12 nach seiner Herausformung aus der Hauptebene H über das Formschlusselement 211 und die Schnittstelle 32 mit der durchgehenden Öffnung zwei Schnittstellen für die Festlegung von Funktionselementen an dem Basisträger 1 aus.

In der Figur 2 ist eine weitere Ausführungsvariante eines Basisträgers 1 für eine erfindungsgemäße Trägervorrichtung ausschnittsweise dargestellt. Hierbei umfasst der Basisträger 1 wenigstens zwei erste und zweite. dreiecksförmige Materialbereiche 12a, 12b, welche aus der Hauptebene H herausgeformt sind. Der erste Materialbereich 12a grenzt an eine Auftrennung im Material des Basisträgers 1 an und ist unter Bildung eines Freiraums 15a aus der Hauptebene H herausgeformt. Die Auftrennung verläuft hierbei im Wesentlichen senkrecht zu dem äußeren Rand 11 des Basisträgers 1 entlang der Vertikalrichtung y. Ein erster Rand 151a der Auftrennung bildet einen Rand des ersten dreiecksförmigen Materialbereichs 12a aus. Ein zweiter Rand 152a der Auftrennung erstreckt sich in der Hauptebene H und bildet einen Rand eines Bereichs des Basisträgers 1, der sich angrenzend an die Auftrennung in der Hauptebene H erstreckt.

Der erste dreiecksförmige Materialbereich 12a ist von der Hauptebene H entlang der Querrichtung z weggeklappt. Hierdurch ist ein Faltrand 16a in dem Basisträger 1 ausgebildet. Der Faltrand 16a liegt in der Hauptebene H und bildet einen zweiten Rand des ersten dreiecksförmigen Materialbereichs 12a aus. Der dritte Rand des ersten dreiecksförmigen Materialbereichs 12a wird durch einen weggeklappten Abschnitt des äußeren Randes 11 ausgebildet. Somit steht der erste dreiecksförmige Materialbereich 12a aus der Hauptebene H hervor und ist über den Faltrand 16a mit dem übrigen Organoblech des Basisträgers 1 verbunden.

Eine angespritzte Versteifungsrippe 241a aus thermoplastischem Kunststoffmaterial stützt den ersten dreiecksförmigen Materialbereich 12a in seiner Position. Die Versteifungsrippe 241a ist vorliegend ebenfalls dreiecksförmig ausgebildet und verbindet den ersten dreiecksförmigen Materialbereich 12a mit einem angrenzenden Bereich des Organoblech-Basisträgers 1.

Der zweite dreiecksförmige Materialbereich 12b der Figur 2 ist nahezu identisch zu dem erste dreiecksförmigen Materialbereich 12a ausgebildet und vorliegend in Richtung des ersten dreiecksförmigen Materialbereichs 12a gefaltet. Im Unterschied zu dem ersten dreiecksförmigen Materialbereich 12a ist kein Rand des zweiten dreiecksförmigen Materialbereichs 12b als Rand einer Auftrennung ausgebildet. Demgegenüber handelt es sich bei dem zweiten dreiecksförmigen Materialbereich 12b um einen umgefalteten Eckbereich des Basisträgers 1. Zwei seiner Ränder sind somit jeweils durch Abschnitte des äußeren Randes 11 des Basisträgers 1 ausgebildet.

Der dritte Rand des zweiten dreiecksförmigen Materialbereichs 12b ist analog zu dem ersten dreiecksförmigen Materialbereich 12a als Faltrand 16b ausgebildet, der durch das Wegklappen des zweiten dreiecksförmigen Materialbereichs 12b aus der Hauptebene entstanden ist. Auch der zweite dreiecksförmige Materialbereich 12b ist ferner durch eine angespritzte Versteifungsrippe 241b aus thermoplastischem Kunststoffmaterial in seiner Position fixiert.

Zwischen dem Faltrand 16a des ersten dreiecksförmigen Materialbereichs 12a und dem zweiten Rand 152a der Auftrennung erstreckt sich in der Hauptebene H ein erster Freiraum 15a. Analog erstreckt sich zwischen dem Faltrand 16b des zweiten dreiecksförmigen Materialbereichs 12b und dem Bereich in der Hauptebene H, in dem sich die Abschnitte des äußeren Randes 11 des zweiten dreiecksförmigen Materialbereichs 12b vor dem Wegklappen befanden, ein zweiter Freiraum 15b. Die beiden Freiräume 15a, 15b sind jeweils durch Anspritzungen 21a, 21b aus thermoplastischem Kunststoffmaterial ausgefüllt. Die Anspritzungen 21a und 21b erstrecken sich hierbei im Wesentlichen in der Hauptebene H.

Weiterhin ist an dem äußeren Rand 11 des Basisträgers 1, der entlang der Vertikalrichtung y den (oberen) Abschluss des Basisträgers 1 bildet und sich entlang der Horizontalrichtung x erstreckt, über die gesamte Länge des dargestellten Ausschnitts eine randseitige Anspritzung 26 aus thermoplastischem Kunststoffmaterial ausgebildet. Diese Anspritzung 26 bildet einen äußeren Rand des Basisträgers 1 in der Hauptebene H. Über die thermoplastischen Anspritzungen 21a, 21b und 26 ist eine dreidimensionale Struktur, die mit den aus der Hauptebene H herausgeformten, insbesondere herausgefalteten, dreiecksförmigen Materialbereichen 12a, 12b gebildet ist, (zusätzlich) stabilisiert. Weiterhin ist hierüber ein durch das Auftrennen des Basisträgermaterials und dem Wegfalten der Basisträgerabschnitte entstandener Freiraum 15a, 15b wieder verschlossen, vorzugsweise dichtend.

An den ersten und zweiten dreiecksförmigen Materialbereichen 12a und 12b ist ergänzend jeweils eine Schnittstelle 32a oder 32b ausgebildet. Eine Schnittstelle 32a oder 32b weist hierbei eine Öffnung auf, die mit einer zusätzlichen Anspritzung 25a oder 25b aus thermoplastischem Kunststoffmaterial versehen ist. Die jeweilige zugehörige Versteifungsrippe 24a oder 24b verläuft zumindest teilweise hinter der Schnittstelle 32a, 32b.

In einer weiteren Ausführungsvariante, welche ich hier nicht dargestellt ist, ist ein Materialbereich, wie zum Beispiel einer der beiden dreiecksförmigen Materialbereiche 12a, 12b, vollständig umgefaltet, sodass er an dem Organoblech des Basisträgers 1 anliegt. Mit anderen Worten ist hier dann ein Materialbereich um etwa 180° umgeklappt und fixiert. Hierdurch kann beispielsweise eine Materialverdopplung erreicht werden.

Die Figur 3 zeigt im Ausschnitt eine weitere Ausführungsvariante eines Basisträgers 1 für eine erfindungsgemäße Trägervorrichtung. In dem Basisträger 1 sind hier zwei zueinander parallel verlaufende Auftrennungen vorgesehen, die jeweils mit dem äußeren Rand 11 des Basisträgers 1 verbunden sind. Die Auftrennungen verlaufen im Wesentlichen senkrecht zu dem äußeren Rand 11 entlang der Vertikalrichtung y und schließen einen einzelnen laschenartigen Materialbereich 12 ein, welcher aus der Hauptebene H herausgeformt ist. Hierbei sind zwei Ränder 131 und 132 der ersten Auftrennung sowie zwei Ränder 141, 142 der zweiten Auftrennung entlang der Querrichtung z zueinander beabstandet. Die beiden Ränder 131, 132 der ersten Auftrennung beranden einen ersten Freiraum 13 zwischen dem Materialbereich 12 und einem an einer (linken) Seite hieran angrenzenden Bereich des Basisträgers 1, während die beiden Ränder 141, 142 der zweiten Auftrennung einen Freiraum zwischen dem Materialbereich 12 und einem an einer anderen (rechten) Seite hieran angrenzenden Bereich des Basisträgers 1 beranden.

Der Materialbereich 12 ist derart aus der Hauptebene H herausgeformt, dass der erste Rand 131 der ersten Auftrennung, welcher den Materialbereich 12 auf einer ersten Seite begrenzt, und der erste Rand 141 der zweiten Auftrennung, welcher den Materialbereich 12 auf einer zweiten Seite begrenzt, parallel zueinander verlaufen. Diese beiden ersten. Ränder 131 und 141 des Materialbereichs 12 weisen hierbei eine geschwungene Form auf. Der Abschnitt des äußeren Randes 11, welcher zwischen den beiden Auftrennungen liegt und im Wesentlichen senkrecht zu diesen verläuft, bildet eine zweite Seite des laschenartigen Materialbereichs 12.

Die Freiräume 13, 14 zwischen den Rändern 131, 132 und 141, 142 erstrecken sich jeweils im Wesentlichen in einer Ebene senkrecht zur Hauptebene H entlang der Querrichtung z und der Vertikalrichtung y. Die Freiräume 13, 14 sind weiterhin vollständig mit Anspritzungen 21, 22 aus thermoplastischem Kunststoffmaterial gefüllt. Die Anspritzungen 21, 22 bilden hierbei erneut jeweils eine stirnseitige Wandung aus, die zwei voneinander beabstandete Ränder 131, 132 oder 141, 142 einer ersten oder zweiten Auftrennung miteinander verbindet. Hierdurch wird eine mit dem herausgeformten Materialbereich 12 und den Anspritzungen 21, 22 definierte taschenartige Struktur in ihrer Position stabilisiert. Die Verbindung zwischen dem thermoplastischen Kunststoff der Anspritzungen 21, 22 und dem Basisträgermaterial kann hierbei durch eine Umspritzung der Ränder 131, 132, 141, 142 verbessert sein.

In einer hier nicht dargestellten Weiterbildung sind die Ränder einer Auftrennung zusätzlich strukturiert, beispielsweise geschlitzt oder gezackt, um eine weiter verbesserte Verbindung mit angespritzten thermoplastischem Kunststoffmaterial zu ermöglichen.

Der Basisträger 1 ist infolge des Verformungsprozesses zur Ausbildung der taschenartigen Struktur mittels des Materialbereichs 12 entlang der Vertikalrichtung y, d.h., vorliegend an einem oberen Ende, verkürzt. Zum Längenausgleich ist eine weitere randseitige Anspritzungen 26 aus thermoplastischem Kunststoffmaterial an dem oberen Rand des Materialbereichs 12 vorgesehen. Diese randseitige thermoplastische Anspritzungen 26 ist derart ausgebildet, dass ein damit definierter Rand bündig mit dem äußeren Rand 11 der angrenzenden Bereiche des Basisträgers 1 abschließt. Mit anderen Worten ist der äußere Rand 11 des Basisträgers 1, der sich in der Hauptebene H erstreckt, im Bereich des herausgeformten Materialbereichs 12 durch eine randseitige Anspritzung 26 aus thermoplastischem Kunststoffmaterial kontinuierlich fortgeführt.

Die taschenartige Struktur des herausgeformten und mit Anspritzungen 21, 22 und 26 versehenen Materialbereichs 12 kann beispielsweise als Durchgangsöffnung für ein Funktionselement dienen. Beispielsweise kann hierdurch eine Durchgangsöffnung für ein Betätigungsgestänge oder mindestens ein Kabel ausgebildet sein.

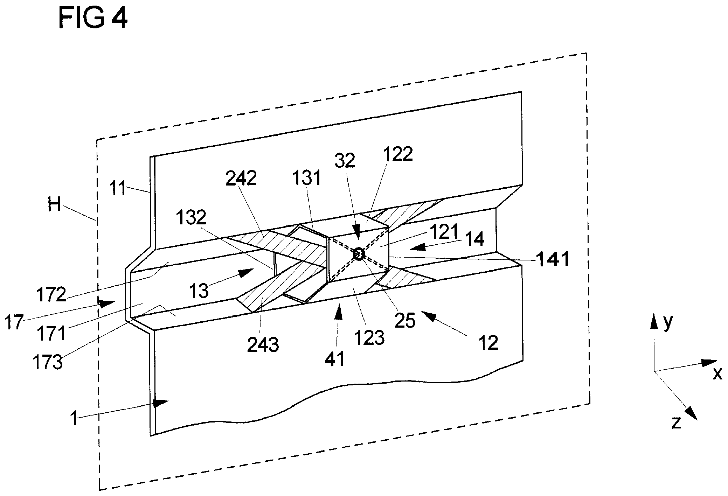

Ein weiteres Ausführungsbeispiel eines Basisträgers 1 für eine erfindungsgemäße Trägervorrichtung ist ausschnittsweise in Figur 4 dargestellt. In dem dort dargestellten Ausschnitt des Basisträgers 1 ist ein längserstreckter Kanal 17 ausgeformt. Der im Querschnitt trapezförmige Kanal 17 erstreckt sich hierbei im Wesentlichen entlang der Horizontalrichtung x und ist entgegen der Querrichtung z aus der Hauptebene H herausgewölbt. Eine Kanalbasisfläche 171 ist damit entgegen der Querrichtung z von der Hauptebene H beabstandet und verläuft parallel zu dieser. An die Kanalbasisfläche 171 schließen sich einander gegenüberliegende, geneigte (schräge) erste und zweite Kanalseitenwände 172, 173 an.

In dem Kanal 17 ist ein Materialbereich 12 an zwei zueinander parallelen Auftrennungen aus der Hauptebene H herausgeformt. Die beiden Auftrennungen verlaufen hierfür im Wesentlichen entlang der Vertikalrichtung y quer zur Erstreckungsrichtung des Kanals 17 und sind entlang der Horizontalrichtung x voneinander beabstandet. Die Auftrennungen erstrecken sich jeweils quer über den Kanal 17 hinweg. Mit anderen Worten verlaufen die Auftrennungen jeweils entlang der ersten Kanalseitenwand 172, über die Kanalbasisfläche 171 und anschließend entlang der zweiten Kanalseitenwand 173. Der Materialbereich 12 ist derart an den Auftrennungen aus der Hauptebene H des Basisträgers 1 herausgeformt, dass er entgegengesetzt zu dem Kanal 17 hervorsteht und den Kanal 17 in zwei durch den Materialbereich 12 unterbrochene Teilstücke trennt. Der Materialbereich 12 weist hierbei eine Kontur auf, welche der Konturen des Kanals 17 gespiegelt an der Hauptebene H entspricht. Somit bildet der (konvexe) Materialbereich 12 unter anderem eine ebene Fläche 121 aus, welche parallel zur Kanalbasisfläche 171 verläuft und von der Hauptebene H identisch beabstandet ist wie die Kanalbasisfläche 171 des (konkaven) Kanals 17, nur in die entgegengesetzte Richtung. Weiterhin bildet der Materialbereich 12 zwei geneigte Seitenwände 122, 123 aus, welche jeweils die gleiche Erstreckung aufweisen wie die ersten und zweiten Kanalseitenwände 172, 173.

Über den herausgeformten Materialbereich 12 werden ein erster Freiraum 13 und ein zweiter Freiraum 14 gebildet, die jeweils zwischen den zwei von der Hauptebene H beabstandeten Rändern 131, 132 und 141, 142 einer Auftrennung ausgebildet sind. Ein erster Rand 131 oder 141 ist jeweils an dem Materialbereich 12 ausgebildet, während ein zugehöriger zweiter Rand 132 oder 142 jeweils an einem benachbarten Teilstück des Kanals 17 ausgebildet ist. Die Freiräume 13 und 14 weisen in einem Querschnitt senkrecht zur Hauptebene H eine sechseckige Grundfläche und die gesamte mit dem Materialbereich 12 definierte vorstehende Erhebung eine prismenförmige Struktur auf. Der aus dem ursprünglichen durchgehend verlaufenden Kanal 17 herausgeformte Materialbereich 12 bildet dabei eine Strukturelement 41 des Basisträgers 1 aus. Dieses Strukturelement 41 wirkt quer zur Hauptebene H versteifend und verbessert mit den angrenzenden Teilstücken des Kanals 17 lokal die Steifigkeit des Basisträgers 1.

Um die Steifigkeit im Bereich des Strukturelements 41 weiter zu erhöhen, ist dieses jeweils mit einer Versteifungsrippe 242 oder 243 versehen. Die jeweilige Versteifungsrippe 242 oder 243 greift hierbei durch das Strukturelement 41 hindurch und ist aus einem angespritzten thermoplastischem Kunststoffmaterial gebildet. Die sich jeweils zumindest auch entlang der Horizontalrichtung x erstreckenden Versteifungsrippen 24 2,243 sind dabei derart an den Basisträger 1 angespritzt, dass hierüber eine zusätzliche Verbindung des Materialbereichs 12 mit dem Organoblech auf beiden Seiten des Strukturelements 41 hergestellt ist. Die Versteifungsrippen 242, 243 sind jeweils stoffschlüssig mit dem Materialbereich 12, insbesondere mit der ebenen Fläche 121 und einer Kanalseitenwand 171, 172 oder beiden sich gegenüberliegenden Kanalseitenwänden 171, 172 verbunden. Die beiden Versteifungsrippen 242, 243 kreuzen sich hierbei im Bereich eines Mittelpunkt des Materialbereichs 12 an der ebenen Fläche 121, und zwar auf einer der Kanalbasisfläche 171 zugewandten Unterseite des Materialbereichs 12. In dem Bereich, in dem sich die beiden Versteifungsrippen 24 2,243 kreuzen, entsteht ein Bereich mit erhöhtem Materialaufkommen. Dieser Bereich kann dazu ausgebildet sein, ein Befestigungselement, wie zum Beispiel eine Schraube, aufzunehmen. In der ebenen Fläche 121 des Materialbereichs 12 ist hierfür eine Schnittstelle 32 ausgebildet. Diese Schnittstelle 32 ist zusätzlich auf einer Oberseite des Materialbereichs 12 mit einer thermoplastischen Anspritzungen 25 versehen. Diese zusätzliche thermoplastische Anspritzungen 25 dient beispielsweise der Einhaltung enger(er) Toleranzen für den Durchmesser der das Befestigungselement aufnehmenden Öffnung.

Die beiden Versteifungsrippen 242 und 243 strecken sich vorliegend wenigstens so weit in das Strukturelement 41 hinein, dass sie sich entlang der Erstreckungsrichtung des Kanals 17, entlang der die als Strukturelemente fungierenden Teilstücke des Kanals 17 und der herausgeformte Materialbereich 12 aufeinanderfolgen, eine Ausdehnung derart aufweisen, dass die Ausdehnung einer Versteifungsrippe 242, 243 entlang dieser Erstreckungsrichtung in dem Strukturelement 41 wenigstens 25 % der Ausdehnung des Strukturelements 41 selbst entlang dieser Erstreckungsrichtung entspricht. Vorliegend sind die Versteifungsrippen 242, 243 im Bereich des durch den Materialbereich 12 gebildeten Strukturelements 41 sogar deutlich länger und erstrecken sich über dessen gesamte Breite.

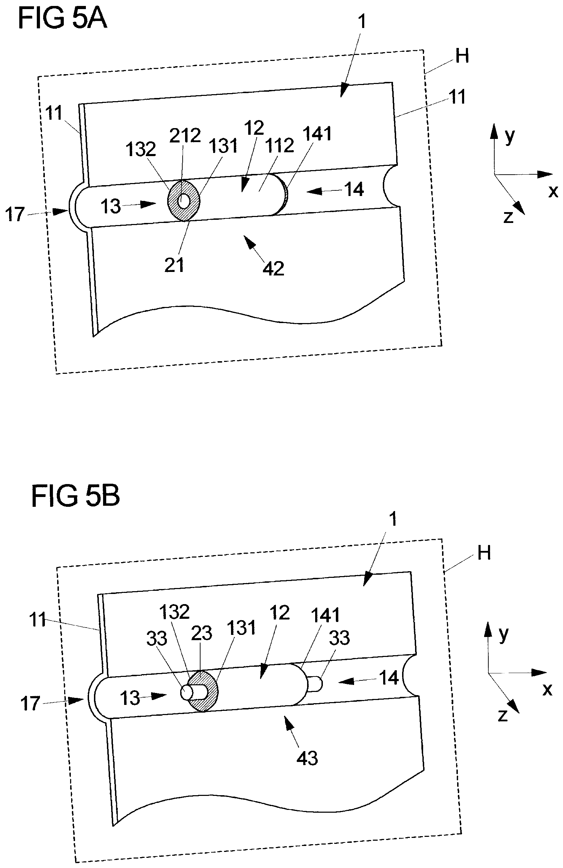

In den Figuren 5A und 5B sind zwei weitere Ausführungsvarianten eines Basisträgers 1 für eine erfindungsgemäße Trägervorrichtung im Ausschnitt dargestellt. Die Varianten der Figuren 5A und 5B stimmen konzeptionell mit der Variante der Figur 4 weitgehend überein, sodass auf die diesbezügliche Beschreibung Bezug genommen wird.

In dem Basisträger 1 der Figuren 5A und 5B ist wiederum ein längserstreckter Kanal 17 ausgeformt, vorliegend mit halbkreisförmigem Querschnitt. Analog zu dem Ausführungsbeispiel der Figur 4 ist bei den hier dargestellten Ausführungsvarianten jeweils ein Materialbereich 12 durch zwei Auftrennungen eingegrenzt. Die beiden Auftrennungen verlaufen im Wesentlichen entlang der Vertikalrichtung y quer zu dem Kanal 17 und sind entlang der Horizontalrichtung x voneinander beabstandet. Der Materialbereich 12 ist wiederum jeweils aus der Hauptebene H derart herausgeformt, dass seine Kontur spiegelbildlich zur Kontur der angrenzenden Teilstücken des Kanals 17 verläuft.

Die sich damit durch die Herausformung des jeweiligen Materialbereichs 12 ergebenden kreisringförmigen Freiräume 13 und 14, die entlang der Erstreckungsrichtung des Kanals 17 zueinander beabstandet sind, sind vorliegend jeweils größtenteils mit thermoplastischem Kunststoffmaterial geschlossen. Vorliegend ist derart über den aus der Hauptebene H an zwei Auftrennungen herausgeformten und konvex gewölbten Materialbereich 12 jeweils ein kreiszylindrisch erscheinendes Strukturelement 42, 43 an dem jeweiligen Basisträger 1 ausgebildet.

Bei der Ausführungsvariante der Figur 5A ist an stirnseitigen Anspritzungen 21 zum Schließen eines Freiraums 13, 14 jeweils eine zentrale Öffnung 212 ausgebildet. Diese Öffnung 212 dient als Schnittstelle für die Festlegung eines Funktionselements oder als Durchgangsöffnung, z.B. für die Durchführung eines Gestänges oder mindestens eines Kabels von einer Seite des Basisträgers 1 auf die gegenüberliegende Seite.

Bei der Ausführungsvariante der Figur 5B ist über eine Anspritzung 23 an den herausgeformten Materialbereich 12 ein Einsatzelement 33 in Form eines zusätzlichen zylindrischen Stabs oder Stifts an dem Strukturelement 43 gehalten. Die Anspritzung 23 erstreckt sich hierbei über die gesamte Unterseite des Materialbereichs 12 und bildet damit das Strukturelement 43 als zylindrischen Vollkörper an dem Basisträger 1 aus. Der Materialbereich 12 ist somit vorliegend vollständig mit thermoplastischem Kunststoffmaterial hinterspritzt. Das sich parallel zur Erstreckungsrichtung des Kanals 17 erstreckende Einsatzelement 33 ist dabei in das hinterspritzte Kunststoffmaterial eingebettet und steht mit je einem Stiftende aus dem Strukturelement 43 beidseitig hervor. Jedes axial vorstehende stiftende kann hierbei eine Schnittstelle für die Festlegung, insbesondere die (drehbare) Lagerung eines Funktionselements definieren.

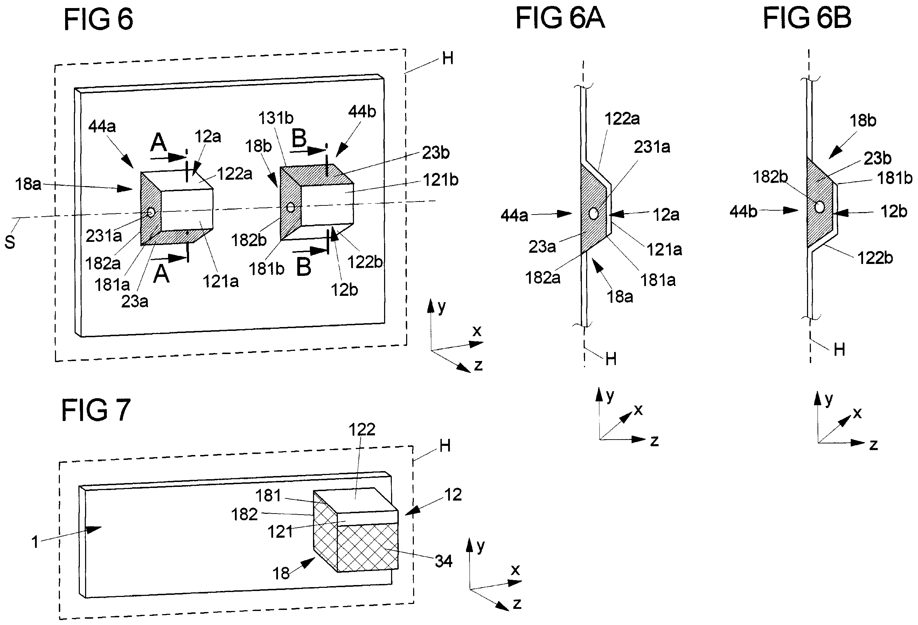

Die Figur 6 zeigt ausschnittsweise und in Zusammenschau mit den Schnittdarstellungen der Figuren 6A und 6B eine weitere Variante eines Basisträgers 1 für eine erfindungsgemäße Trägervorrichtung. Der flächige Basisträger 1 der Trägervorrichtung weist hier zwei Strukturelemente 44a, 44b auf, die entlang der Horizontalrichtung x voneinander beabstandet angeordnet sind. Die Strukturelemente 44a und 44b sind dabei im Grundsatz identisch hergestellt, jedoch um 180° zueinander gedreht ausgebildet. So erstreckt sich ein erster mehrfach abgewinkelter laschenartiger Materialbereich 12 a des einen Strukturelements 44a im Wesentlichen von unten nach oben, während ein zweiter laschenartiger Materialbereich 12b des anderen Strukturelements 44b, der eine identische Länge aufweist und ebenfalls mehrfach abgewinkelt ist, von unten nach oben erstreckt.

Ein Strukturelement 44a, 44b ist jeweils dadurch ausgebildet, dass der jeweilige Materialbereich 12a, 12b angrenzend an eine U-förmige Auftrennung unter Bildung eines Freiraums 18a, 18b aus der Hauptebene H des Basisträgers 1 herausgeformt ist. Die Auftrennung, die jeweils zwei parallel zur Vertikalrichtung y verlaufende Abschnitte und einen entlang der Horizontalrichtung x verlaufenden Abschnitt aufweist, definiert jeweils einen laschenartigen Basisträgerabschnitt mit rechteckiger Grundfläche, der aus der Hauptebene H zur Bildung des vorstehenden Materialbereichs 12a oder 12b herausgebogen ist. Jeder Materialbereich 12a, 12b weist eine ebene Fläche 121a, 121b auf, welche sich parallel zur Hauptebene H erstreckt und entlang der Querrichtung z von dieser beabstandet ist. Weiterhin weist jeder Materialbereich 12a, 12b eine schräg zur ebenen Fläche 121a, 121b verlaufende Fläche 122a, 122b auf, welche unter einer Abwinklung von der Hauptebene H absteht und die ebene Fläche 121a, 121b mit dem sich in der Hauptebene H erstreckenden Bereich des Basisträgers 1 verbindet.

Jeder der Auftrennungen für den Materialbereich 12a oder 12b der Figuren 6, 6A und 6B bildet zwei Ränder 181a, 182a oder 181b, 182b aus. Hierbei ist jeweils ein erster Rand 181a oder 181b dem jeweiligen vorstehenden Materialbereich 12a oder 12b zugeordnet. Ein zweiter Rand 182a oder 182b ist dem unmittelbar an den jeweiligen Materialbereich 12a oder 12b angrenzenden Bereich des Basisträgers 1 zugeordnet. Aufgrund der Beabstandung des ersten Randes 181a, 181b entlang der Querrichtung z von dem zugehörigen zweiten Rand 182a oder 182b derselben Auftrennung ist jeweils ein Freiraum 18a oder 18b aufgespannt.

Dieser Freiraum 18a, 18b ist jeweils mit thermoplastischem Kunststoffmaterial gefüllt. Hierbei ist der herausgeformte Materialbereich 12a, 12b jeweils vollständig hinterspritzt. Eine hierfür vorgesehene Anspritzungen 23a oder 23b aus thermoplastischem Kunststoffmaterial verbindet damit den aus der Hauptebene H vorstehenden Materialbereich 12a oder 12b mit den ihn umgebenden Bereichen des Basisträgers 1, an denen das Organoblech des Basisträgers 1 aufgetrennt wurde.

Die beiden Strukturelemente 44a und 44b der Figur 6 weisen jeweils eine durchgehende zylinderförmige Aussparung 231a, 231b auf, welche durch das Zentrum der Anspritzungen 23a und 23b verläuft. Die zylinderförmige Aussparung 231a, 231b erstreckt sich im Wesentlichen entlang der Horizontalrichtung x und bildet eine durchgängige Öffnung durch das Strukturelement 44a, 44b. Die Strukturelemente 44a und 44b sind hierbei derart ausgebildet und an dem Basisträger 1 angeordnet, dass sie zwar entlang der horizontalen Richtung x voneinander beabstandet sind, die zylinderförmigen Aussparungen 231a, 231b aber koaxial angeordnet sind. Somit können die beiden Strukturelemente 44a, 44b beispielsweise dazu ausgebildet sein, gemeinsam ein vorzugsweise stiftförmiges Einsatzelement aufzunehmen, das zumindest teilweise durch die beiden zylinderförmigen Aussparungen 231a und 231b verläuft. Das Einsatzelement kann hierbei als Schnittstelle zur Lagerung eines Funktionselements dienen.

Anstatt das Einsatzelement nachträglich in eine Aussparung 231a, 231b entlang einer Erstreckungsachse S einzuführen, kann das Einsatzelement, das zum Beispiel aus Leichtmetall oder Blech hergestellt ist, auch an den Materialbereich 12 selbst angespritzt, eingeklebt, angeschweißt oder angenietet sein.

In der Figur 7 ist eine weitere Ausführungsvariante eines Basisträgers 1 für eine erfindungsgemäße Trägervorrichtung ausschnittsweise dargestellt. Auch hier ist ein Materialbereich 12 laschenartig aus der Hauptebene H unter Bildung eines Freiraums 18 im Bereich einer Auftrennung herausgeformt. Der Materialbereich 12 weist analog zu den Strukturelementen 44a und 44b der Figuren 6, 6A und 6B eine ebene, vorliegend schmale und parallel zur Hauptebene H verlaufende Fläche 121 und eine hierzu geneigt verlaufende Fläche 122 auf, die in der Figur 7 schraffiert dargestellt sind.

Anstelle einer thermoplastischen Anspritzung ist in einem von Rändern 181, 182 des Materialbereichs 12 und dem angrenzenden Bereich des Basisträgers 1 berandeten Freiraum 18 ein quaderförmiges Einsatzelement 34 angeordnet. Das Einsatzelement 34 ist mit dem Materialbereich 12 und dem angrenzenden Bereich fest verbunden, vorzugsweise stoffschlüssig und/oder formschlüssig. Hierdurch können beispielsweise Zugkräfte, welche an dem Einsatzelement 34 angreifen, unmittelbar in das Organoblech eingeleitet werden. Über den laschenartig aus der Hauptebene H herausgeformten Materialbereich 12 und das Verschließen des hierdurch gebildeten Freiraums 18 mittels eines separaten Einsatzelement 34 ist hier eine belastungsoptimierte dreidimensionale Struktur an dem Organoblech des Basisträgers 1 geschaffen.

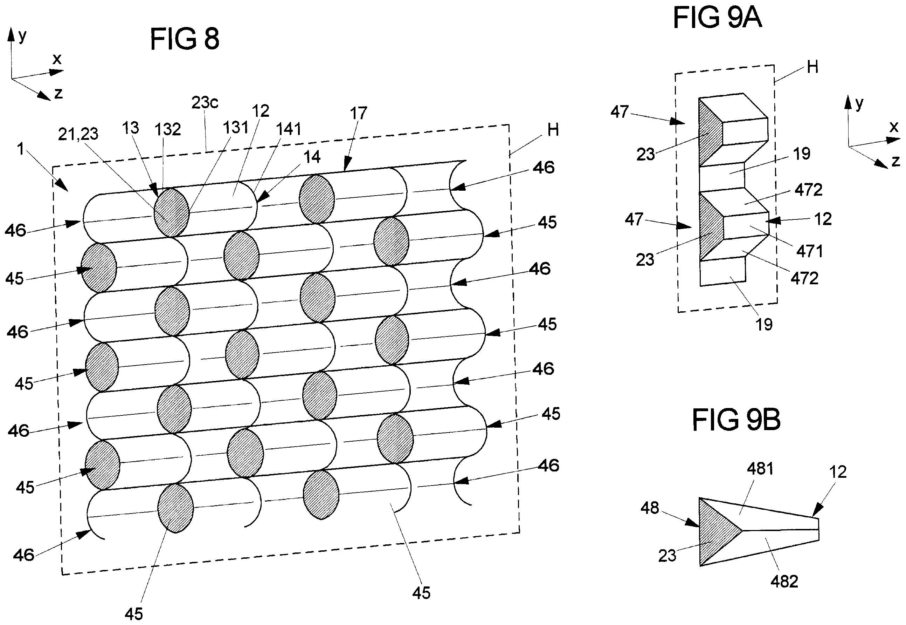

In der Figur 8 ist eine weitere Ausführungsvariante eines Basisträgers 1 für eine erfindungsgemäße Trägervorrichtung im Ausschnitt dargestellt. Der Basisträger 1 weist hier eine Vielzahl von systematisch in mehreren parallel zueinander verlaufenden Reihen nebeneinander angeordnete Strukturelemente 45 und 46 auf. Hierbei wechseln sich Strukturelemente 46, die als Teilstücke eines Kanals 17 gebildet sind, mit Strukturelementen 45 ab, die jeweils durch einen zwischen zwei Auftrennungen herausgeformten Materialbereich 12 gebildet sind. Die unterschiedlich gebildeten Strukturelemente 45, 46 sind dabei einander abwechselnd sowohl entlang der Horizontalrichtung x als auch entlang der Querrichtung y nebeneinander angeordnet.

Zur Stabilisierung sind die durch die jeweils durch einen herausgeformten Materialbereich 12 gebildeten Strukturelemente 45 entweder mit stirnseitigen Anspritzungen 21 oder den Materialbereich 12 vollständig hinterspritzenden Anspritzungen 23 versehen. Durch die sich entlang der Horizontalrichtung x und entlang der Vertikalrichtung y abwechselnden konkaven und konvexen Strukturenelemente 45 und 46 ist die Oberfläche des Basisträgers 1 zumindest abschnittsweise gewellt. Diese dreidimensionale Wellenstruktur, die mithilfe an Auftrennungen herausgeformten und mit Anspritzungen 21 oder 23 versehener Materialbereiche 12 gebildet ist, kann einer verbesserten Absorption von Crashkräften dienen. Zur zusätzlichen Versteifung können zusätzlich Versteifungsrippen aus thermoplastischem Kunststoffmaterial zwischen benachbarten konvexen und konkaven Strukturelementen 45 und 46, zum Beispiel analog zu dem Ausführungsbeispiel der Figur 4 vorhergesehen werden.

In den Figuren 9A und 9B ist jeweils in vergrößertem Maßstab eine alternative Ausgestaltung eines Strukturelements 47 oder 48 mittels eines herausgeformten Materialbereichs 12 veranschaulicht.

Bei der Variante der Figur 9A ist ein Pyramidenstumpfförmiges Strukturelement 47 durch einen mehrfach abgewinkelten herausgeformten Materialbereich 12 und eine Anspritzungen 23 aus thermoplastischem Kunststoffmaterial gebildet. Hierbei ist der an zwei zueinander parallel verlaufenden auf Auftrennungen herausgeformte Materialbereich 12 durch das Kunststoffmaterial vollständig hinterspritzt, sodass die hiermit definierte Erhebung mit einer im Wesentlichen parallel zur Hauptebene H verlaufenden Basisfläche 471 und zwei schräg hierzu verlaufenden Seitenflächen 472 durch das angespritzte Kunststoffmaterial stabilisiert ist. In der Figur 9A dabei sind exemplarisch zwei Strukturelemente entlang der Vertikalrichtung y hintereinander dargestellt, die durch einen ebenen Bereich 19 des Basisträgers 1 voneinander räumlich separiert sind.

Bei der Variante der Figur 9B ist ein pyramidenförmiges Strukturelement 48 durch einen trichterförmig herausgeformten Materialbereich 12 und eine Anspritzung 23 aus thermoplastischem Kunststoffmaterial gebildet. Die drei Seiten des pyramidenförmigen Strukturelements 48, das von der Hauptebene H erhaben hervorsteht, werden somit einerseits durch die Anspritzung 23, die einen entstandenen Freiraum vollständig ausfüllt, und andererseits durch zwei jeweils schräg zur Hauptebene H und unter einem Winkel zueinander verlaufende Flächen 481 des Materialbereichs 12 gebildet.

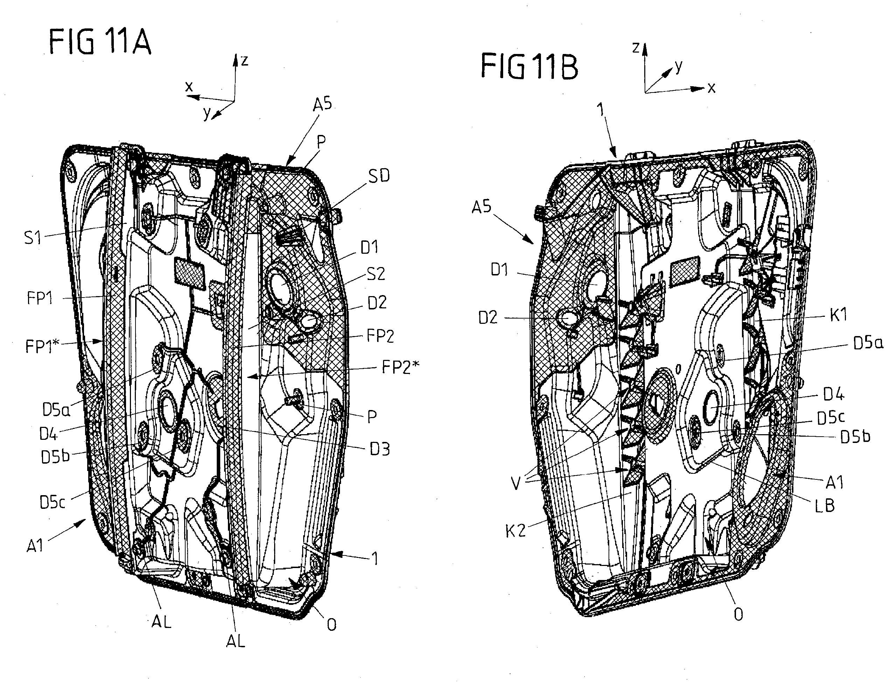

Anhand der Figuren 11A-11B, 12A-12D und 13A-13B ist eine Ausführungsvariante einer erfindungsgemäßen Trägervorrichtung mit einem Basisträger 1 in Form eines Aggregateträgers für ein Türmodul einer Kraftfahrzeugtür veranschaulicht. Der Basisträger 1 dient hierbei der Festlegung mehrerer unterschiedlicher Funktionselemente, wie zum Beispiel eines Lautsprechers oder von Teilen eines Fensterhebers zum Anheben und Absenken einer Fensterscheibe der Kraftfahrzeugtür.

Die perspektivischen Darstellungen der Figuren 11A und 11B zeigen dabei den Basisträger 1 mit Blick auf eine einem Türaußenblech zugewandte Außenseite des Basisträgers 1 sowie mit Blick auf eine einer Türinnenverkleidung zugewandte Innenseite des Basisträgers 1. Wie insbesondere anhand der Figuren 11A und 11B ersichtlich ist, ist der dargestellte Basisträger 1 zu einem wesentlichen Teil aus einem Organoblech O mit mehreren umgeformten Bereichen und hieran angespritztem thermoplastischen Kunststoffmaterial gebildet. An einen Rand des Organoblechs O sind insbesondere großflächige Bereiche angespritzt, die an dem fertig gestellten Basisträger 1 randseitige Flächenabschnitte A1 und A5 ausbilden. Über diese Flächenabschnitte A1 und A5, die vollständig aus thermoplastischem Kunststoffmaterial hergestellt sind, ist jeweils nicht nur ein Teil eines umlaufenden Dichtungsrandes des Basisträgers 1 ausgeformt, sondern auch mehrere Befestigungsstellen für die Verbindung des Basisträgers 1 mit einer Türstruktur. Darüber sind hieran mehrere Durchgangsöffnungen D1, D2 zum Beispiel für die Durchführung von Kabeln oder Gestängeteilen durch den Basisträger 1 hindurch und/oder für ein Werkzeug zur Montage des Fensterhebers vorgesehen.

Des Weiteren sind an dem Organoblech O über angespritztes thermoplastisches Kunststoffmaterial in einem zentralen Bereich Durchgangsöffnungen D3, zum Beispiel für die Anbindung eines Airbagsensors, sowie Durchgangsöffnungen D4 für eine Antriebswelle eines Fensterhebers und Durchgangsöffnungen D5a bis D5c für die Fixierung eines Fensterheberantriebs ausgeformt. Die Durchgangsöffnungen D5a bis D5c sind dabei um die Durchgangsöffnung D4 in einem Lagerbereich LB für den Fensterheberantrieb gruppiert.

Aus angespritztem thermoplastischem Kunststoffmaterial sind zudem für die Positionierung des Basisträgers 1 an einer Türstruktur der Kraftfahrzeugtür an verschiedenen Stellen Positionierungszapfen P ausgeformt. Über diese Positionierungszapfen P kann der Basisträger 1 in einer Position an der Türstruktur gehalten werden, bis der Basisträger 1 bestimmungsgemäß fixiert ist. Ferner werden über angespritztes thermoplastisches Kunststoffmaterial auch (weitere) Schnittstellen zur Festlegung von Funktionselementen an dem Basisträger 1 definiert, zum Beispiel in Form von Schraubdomen SD oder in Form von Lagerstellen AL für die Festlegung von Seilrollen zur Umlenkung eines Seilzuges des Fensterhebers.

Das Organoblech O bildet in einem zentralen Bereich ferner zwei an der Außenseite vorstehende Sockel S1 und S2 aus, die jeweils als Stabilitätsprofil für eine an dem Basisträger 1 vorgesehene Führungsschiene FS1* oder FS2* dienen. An einer solchen Führungsschiene FS1* oder FS2* ist in an sich bekannter Weise ein mit der zu verstellenden Fensterscheibe verbundener Mitnehmer verschieblich, um die Fensterscheibe entlang der Führungsschienen FS1* und FS2* anheben und absenken zu können. An die Sockel S1 und S2 ist hierbei thermoplastisches Kunststoffmaterial angespritzt, das jeweils ein Führungsprofil FP1 oder FP2 einer Führungsschiene FS1* oder FS2* ausformt. Während ein Führungsprofil FP1 oder FP2 der gleitenden Führung eines Mitnehmers an der zugehörigen Führungsschiene FS1* oder FS2* dient, werden über den jeweiligen Sockel S1 oder S2 aus Organoblech O die im Betrieb auftretenden Kräfte aufgenommen.

Über an das Organoblech O angespritztes thermoplastisches Kunststoffmaterial sind im Übrigen auch an verschiedenen Stellen Versteifungsstrukturen V mit mindestens einer, vorzugsweise mehreren Versteifungsstegen oder -rippen ausgeformt. Beispielsweise sind derartige Versteifungsstrukturen V in an der Innenseite des Basisträgers 1 ausgebildeten Kanälen K1 und K2 des Organoblechs O vorgesehen. Diese Kanäle sind aufgrund der Ausformung der an der gegenüberliegenden Außenseite vorstehenden Sockel S1 und S2 an der Innenseite des Basisträgers 1 ausgebildet.

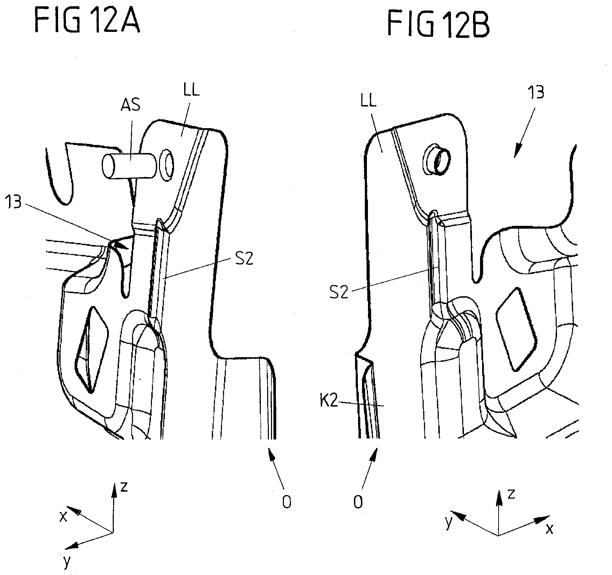

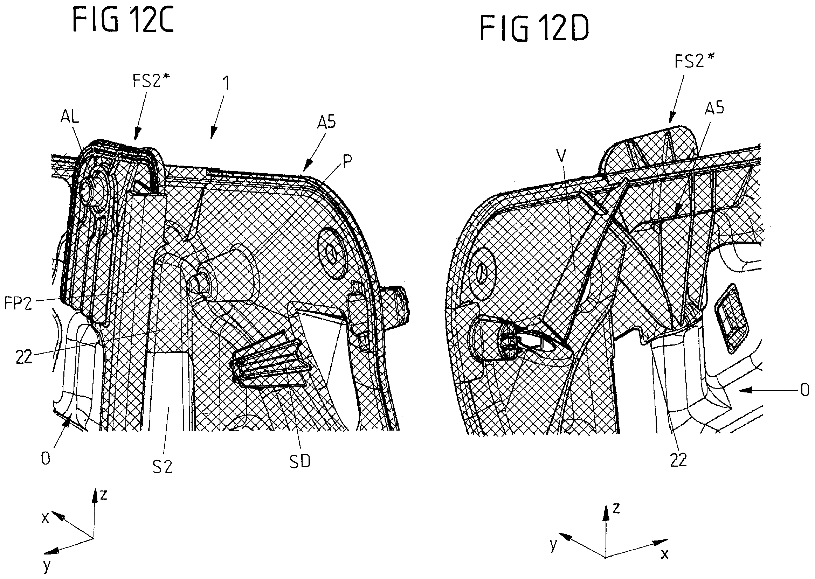

Anhand der Detaildarstellungen der Figuren 12A bis 12D ist der Bereich des Basisträgers 1 an einem oberen Ende der Führungsschiene FS2* näher veranschaulicht. Hierbei zeigen die Figuren 12A und 12B mit Blick auf die Außen- und Innenseite des Basisträgers 1 zunächst einen Ausschnitt des hier vorliegenden Organoblechs O ohne das angespritzte thermoplastische Kunststoffmaterial. An dem sich an den Sockel S2 anschließenden Abschnitt aus Organoblech O ist ein Lagerabschnitt in Form einer Lagerlasche LL für die spätere drehbare Lagerung einer Seilrolle des Fensterhebers ausgebildet. An der Lagerlasche LL ist eine Bohrung oder ein Loch mit einem auf der Innenseite der Lagerlasche LL vorstehenden Kragen aus Organoblech O ausgebildet. In dieses Loch ist eine Lagehülse HS eingesteckt, die durch das angespritzte thermoplastische Kunststoffmaterial in dem Loch fixiert wird. Die Lagerhülse HS dient dann der Aufnahme eines Bolzens für die drehbare Lagerung und axiale Sicherung der Seilrolle. Dies ist unter anderem in der vergrößerten Darstellung der Figuren 12C und 12D näher veranschaulicht.

Das angespritzte, die Lagerlasche LL umgebende thermoplastische Kunststoffmaterial geht in diesem Bereich nahtlos in das Kunststoffmaterial des Flächenabschnitts A5 und das angespritzte Führungsprofil FP2 über. Über das angespritzte thermoplastische Kunststoffmaterial ist in diesem Bereich unter Nutzung des erfindungsgemäßen Ansatzes ein Versatz zwischen den an dem Organoblech O ausgebildeten Strukturen ausgeglichen. Die Lagerlasche LL ist hierbei Teil eines aus der Hauptebene des Basisträgers 1 herausgeformten Materialbereichs, der an wenigstens eine Auftrennung des Organoblechs O in Form eines Schnittes angrenzt. Durch die lokale Auftrennung des Organoblechs O und die Herausformung der Lagerlasche LL sind die Ränder der Lagerlasche LL und die Ränder hieran angrenzender Bereiche des Organoblechs O zueinander beabstandet. Zudem liegen die Lagerlasche LL und die hieran angrenzenden Bereiche des Organoblechs O nicht in einer gemeinsamen Ebene, sondern sind insbesondere quer zu der von dem Organoblech O aufgespannten Hauptebene des Basisträgers 1 zueinander versetzt. Über das randseitig angespritzte Kunststoffmaterial wird dabei entsprechend den Figuren 12C und 12D der Versatz ausgeglichen und ein zwischen den Rändern der Lagerlasche LL und den hieran angrenzenden Bereichen des Organoblechs O vorhandener Freiraum 13 vollständig geschlossen.

Das Schließen des Freiraums 13 in dem Organoblech O und die Verbindung der zueinander beabstandeten Ränder im Bereich der Lagerlasche LL erfolgt über eine Anspritzung 22 aus thermoplastischem Kunststoffmaterial ferner derart, dass über die Anspritzung 22 ein geradlinig verlaufender Dichtkanal ausgebildet wird, der sich an angrenzende und in einer Dichtebene liegende Abschnitte des Basisträgers 1 anschließt.

Darüber hinaus wird durch das im Bereich der Lagerlasche LL angespritzte thermoplastische Kunststoffmaterial eine Lagerstelle AL für eine Seilrolle ausgebildet sowie eine Versteifungsstruktur V mit mehreren Versteifungsstegen oder -rippen zur lokalen Versteifung des Basisträgers 1 in diesem Bereich.

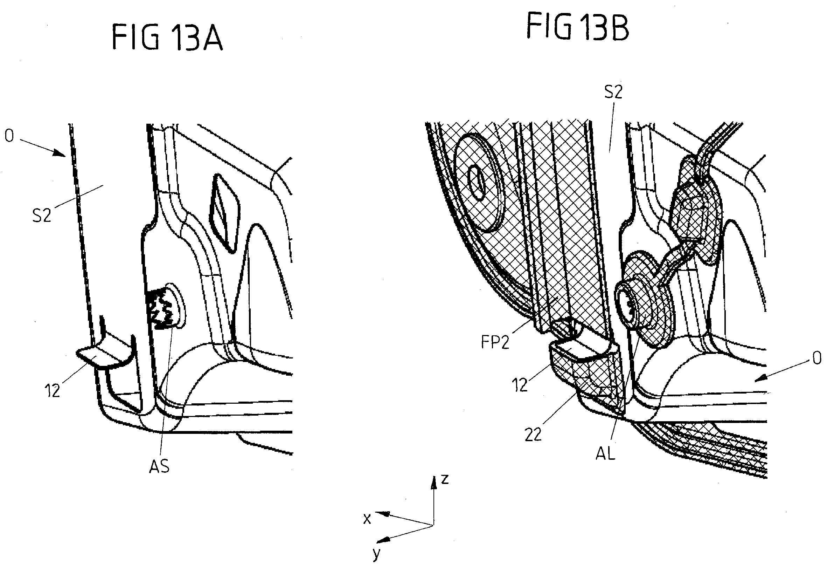

Anhand der Figuren 13A und 13B ist ein vergrößerter Ausschnitt des Flächenabschnitts A1 aus thermoplastischem Kunststoffmaterial sowie ein unteres Ende der Führungsschiene FS1* veranschaulicht. Hierbei zeigen die Figuren 9A und 9B unter anderem, dass an einem sich an den Sockel S1 anschließenden Bereich aus Organoblech O ein Anschlagbereich über einen herausgeformten laschenartigen Materialbereich 12 des Organoblechs O gebildet ist. Der Materialbereich 12 ist über einen U-förmigen Schnitt in das Organoblech O freigeschnitten und quer zu der von dem Organoblech O aufgespannten Hauptebene herausgebogen. Um einerseits den hierbei entstandenen Freiraum in dem Organoblech O zu schließen und andererseits den Materialbereich 12 in seiner Position zu stabilisieren, sodass hierüber ein Anschlagelement zur Begrenzung eines Verstellwegs eines an der Führungsschiene FS2*verschieblichen Mitnehmers gebildet wird, ist eine Anspritzung 22 vorgesehen. Diese Anspritzung 22 füllt einen durch das Herausformen des laschenartigen Materialbereichs 12 aus dem Organoblech O gebildeten Freiraum vollständig aus. Die Anspritzung 22 ist hierbei zudem so ausgeführt, dass der Materialbereich 12 aus Organoblech O vollständig durch die Anspritzung 22 abgestützt ist, und zwar vorliegend entlang derjenigen Richtung, in die ein Mitnehmer an der Führungsschiene FS1* zum Absenken der Fensterscheibe verstellt wird.

Bei allen dargestellten Varianten sind an einem Basisträger 1, der zu einem wesentlichen Teil aus einem Organoblech besteht, aus einer Hauptebene H herausgeformte Materialbereiche 12,12a oder 12b vorgesehen, die aus Abschnitten des Basisträgers 1 gebildet sind, die sich aufgrund von Auftrennungen des Basisträgermaterials, zum Beispiel durch einen entsprechenden Schnitt oder mehrere Schnitte in dem Organoblech, einfach aufbiegen und/oder falten lassen. Über den jeweiligen aufgrund einer Auftrennung leichter verformbaren Materialbereich 12, 12a, 12b sind hierbei vergleichsweise komplexe Strukturen in das Organoblech eingebracht, die dann über das nachträgliche Anspritzen von thermoplastischem Kunststoffmaterial stabilisiert sind und/oder abgedichtet sind. Dabei bilden die einzelnen mittels dieser Materialbereiche 12, 12a, 12b ausgebildeten dreidimensionalen Strukturen an dem Basisträger 1 vorzugsweise Schnitt- oder Lagerstellen für Funktionselemente der Trägervorrichtung oder selbst Funktionselemente aus.

### Bezugszeichenliste

- 1: Basisträger
- 10: Trägerfläche
- 11: Äußerer Rand des Basisträgers
- 12, 12a, 12b: Materialbereich
- 121, 121a, 121b: Ebene Fläche des Materialbereichs
- 122, 122a, 122b: (Schräge) Fläche des Materialbereichs
- 123, 123a, 123b: Zweite (schräge) Fläche des Materialbereichs
- 13: Freiraum
- 131: Erster Rand einer Auftrennung
- 132: Zweiter Rand einer Auftrennung
- 14: Zweiter Freiraum
- 141: Erster Rand einer zweiten Auftrennung
- 142: Zweiter Rand einer zweiten Auftrennung
- 151a: Erster Rand eines Freiraums
- 152a: Zweiter Rand eines Freiraums
- 15a, 15b: Freiraum
- 16a, 16b: Faltrand
- 17: Kanal
- 171: Kanalbasisfläche
- 172: Erster Kanalseitenwand
- 173: Zweite Kanalseitenwand
- 18, 18a, 18b: Freiraum
- 181, 181a, 181b: Erster Rand einer Auftrennung
- 182, 182a, 182b: Zweiter Rand einer Auftrennung
- 19: an ein Strukturelement angrenzender Bereich des Basisträgers
- 21, 21a, 21b: Anspritzung
- 211: Angespritztes Formschlusselement
- 212: Öffnung
- 22: Anspritzung
- 23, 23a, 23b: Anspritzung
- 231a, 231b: Öffnung
- 241a, 241b: Angespritzte Versteifung
- 242, 243: Versteifungsrippe
- 25, 25a, 25b: Anspritzung
- 26: Randseitige Anspritzung
- 31: Randseitige Öffnung
- 32, 32a, 32b: Schnittstelle
- 33, 34: Einsatzelement
- 41: Prismenförmiges Strukturelement
- 42, 43: Zylinderförmiges Strukturelement
- 44a, 44b: Strukturelement
- 45: Zylinderförmiges Strukturelement
- 46: Konkaves Strukturelement
- 47: Pyramidenstumpfförmiges Strukturelement
- 471: Basisfläche
- 472: Schräge Fläche
- 48: Pyramidenförmiges Strukturelement
- 481: Schräge Fläche
- A1, A5: Angespritzter randseitiger Flächenabschnitt
- AL: Angespritzte Lagerstelle
- AS: Ausstülpung
- D1, D2, D3, D4, D5a, D5b, D5c: Durchgangsöffnung
- FP1, FP2: Führungsprofil
- FS1*, FS2*: Führungsschiene
- H: Hauptebene
- HS: Hülse
- K: Kraftfahrzeugtür
- K1, K2: Kanal
- L: Lautsprecher
- LB: Lagerbereich
- LL: Lagerlasche
- O: Organoblech
- P: Positionierungszapfen
- R: Rand des Organoblechs
- R1, R5: Randabschnitt
- S: Achse
- S1, S2: Sockel / Stabilitätsprofil
- SC: Schloss
- SD: Schraubdom
- T: Türmodul
- V: Versteifungsstruktur
- x: Horizontale Richtung
- y: Vertikale Richtung
- z: Querrichtung

## Patentansprüche

1. Trägervorrichtung für ein Kraftfahrzeug, mit einem Basisträger (1), der zu einem wesentlichen Teil durch ein Organoblech gebildet ist und der sich entlang einer Hauptebene (H) erstreckt,
**dadurch gekennzeichnet, dass**
das Organoblech (O) des Basisträgers (1) wenigstens eine Auftrennung aufweist, an der ein Materialbereich (12, 12a, 12b) unter Bildung wenigstens eines Freiraums (13, 14, 15a, 15b, 18, 18a, 18b) aus der Hauptebene (H) heraus geformt ist, so dass dieser Materialbereich (12, 12a, 12b) mit wenigstens einem Abschnitt zu einem angrenzenden Bereich des Basisträgers (1) beabstandet ist und zumindest teilweise von der Hauptebene (H) vorsteht, wobei der wenigstens eine Freiraum (13, 14, 15a, 15b, 18, 18a, 18b) zumindest teilweise derart mit
a) einer Anspritzung (21, 21a, 21b, 22, 23, 23a, 23b, 242, 243) aus thermoplastischem Kunststoffmaterial oder
b) einer Anspritzung (21, 21a, 21b, 22, 23, 23a, 23b, 242, 243) aus thermoplastischem Kunststoffmaterial und einem separaten Einsatzelement (33, 34) gefüllt ist, dass der Abschnitt des herausgeformten Materialbereichs (12, 12a, 12b) und der angrenzende Bereich hierüber miteinander verbunden sind.

2. Trägervorrichtung nach Anspruch 1, **dadurch gekennzeichnet, dass** der wenigstens eine Freiraum (13, 14, 15a, 15b, 18, 18a, 18b) von wenigstens zwei voneinander beabstandeten Rändern (131, 132, 141, 142, 16a, 152a, 16b, 11, 181-182b) begrenzt ist.

3. Trägervorrichtung nach Anspruch 2, **dadurch gekennzeichnet, dass** die wenigstens zwei Ränder des wenigstens einen Freiraums (13, 14, 18, 18a, 18b) durch benachbarte Ränder (131, 132, 141, 142, 181-182b) der Auftrennung gebildet sind und zumindest quer zur Hauptebene (H) voneinander beabstandet sind.

4. Trägervorrichtung nach Anspruch 2, **dadurch gekennzeichnet, dass** wenigstens ein Rand des wenigstens einen Freiraums (15a, 15b) durch einen Faltrand (16a, 16b) gebildet ist, der durch eine Herausformung des Materialbereichs (12a, 12b) gebildet ist.

5. Trägervorrichtung nach wenigstens einem der vorhergehenden Ansprüche, **dadurch gekennzeichnet, dass**
- die wenigstens eine Auftrennung durch Walzen, Pressen, Schneiden, Stanzen, Tiefziehen und/oder Stempeln in dem Basisträger (1) ausgebildet ist und/oder
- die wenigstens eine Auftrennung an dem äußeren Rand (11) des Basisträgers (1) vorgesehen ist und/oder
- die wenigstens eine Auftrennung von dem äußeren Rand (11) des Basisträgers (1) beabstandet angeordnet ist.

6. Trägervorrichtung nach wenigstens einem der vorhergehenden Ansprüche, **dadurch gekennzeichnet, dass** der wenigstens eine Freiraum (13, 13, 14, 14, 15a, 15b, 18, 18a, 18b) durch die Anspritzung (21, 21a, 21b, 22, 23, 23a, 23b, 242, 243) und/oder durch das separate Einsatzelement (33, 34) dichtend verschlossen ist und/oder die Anspritzung und/oder das separate Einsatzelement (33, 34) eine Schnittstelle zur Anbindung und/oder Abstützung für wenigstens ein an der Trägervorrichtung festzulegendes Funktionselement, insbesondere eines Versteifungselements, eines Crashelements, eines Elements einer Antriebsvorrichtung, eines Elements einer Führungsvorrichtung und/oder einer Verriegelungsvorrichtung ausbildet.

7. Trägervorrichtung nach wenigstens einem der vorhergehenden Ansprüche, **dadurch gekennzeichnet, dass** die Anspritzung (21, 21a, 21b, 22, 23, 23a, 23b, 242, 243) ein Deformationselement der Trägervorrichtung ausbildet, welches dazu ausgebildet ist eine auf die Trägervorrichtung wirkende mechanische Energie durch Deformation zumindest teilweise abzubauen und/oder
- eine Versteifung zwischen dem Materialbereich (12, 12a, 12b) und dem angrenzenden Bereich (132, 142, 152a, 17-173, 182, 182a, 182b) des Basisträgers (1) ausbildet.

8. Trägervorrichtung nach wenigstens einem der vorhergehenden Ansprüche, **dadurch gekennzeichnet, dass** die Anspritzung (23) wenigstens eine Oberfläche des herausgeformten Materialbereichs (12, 12a, 12b) komplett überdeckt, so dass sich angespritztes thermoplastisches Kunststoffmaterial über eine durch die Herausformung gebildete und den wenigstens einen Freiraum zumindest teilweise berandete Wandung erstreckt und den Freiraum hierbei teilweise oder vollständig ausfüllt.

9. Trägervorrichtung nach wenigstens einem der vorhergehenden Ansprüche, **dadurch gekennzeichnet, dass** das separate Einsatzelement (33, 34) aus einem metallischen Werkstoff, insbesondere aus Leichtmetall oder Blech, hergestellt ist und/oder das separate Einsatzelement (33, 34) mit dem Basisträger durch Kleben, Ultraschallschweißen, Nieten, Schrauben, und/oder thermoplastisches Umspritzen verbunden ist.

10. Trägervorrichtung nach wenigstens einem der vorhergehenden Ansprüche, **dadurch gekennzeichnet, dass** der Basisträger (1) mehrere Auftrennungen aufweist.

11. Trägervorrichtung nach Anspruch 10, **dadurch gekennzeichnet, dass** der Basisträger (1) wenigstens zwei Auftrennungen aufweist und neben dem aus der Hauptebene (H) herausgeformten Materialbereich (12, 12a, 12b) wenigstens einen weiteren aus der Hauptebene (H) herausgeformten Materialbereich (12, 12a, 12b) aufweist oder der Materialbereich (12, 12a, 12b) an die mehreren Auftrennungen angrenzt und unter Bildung wenigstens eines Freiraums (13, 14, 18, 18a, 18b) aus der Hauptebene (H) heraus geformt ist.

12. Trägervorrichtung nach wenigstens einem der vorhergehenden Ansprüche, **dadurch gekennzeichnet, dass** der Materialbereich (12, 12a, 12b) derart aus der Hauptebene (H) herausgeformt ist, dass eine laschenartige Struktur ausgebildet ist und/oder in dem Basisträger (1) ein Kanal (17) ausgebildet ist und der Materialbereich (12) im Bereich des Kanals (17) aus der Hauptebene (H) herausgeformt ist.

13. Trägervorrichtung nach wenigstens einem der vorhergehenden Ansprüche, **dadurch gekennzeichnet, dass** der Materialbereich (12) und/oder ein daran angrenzender Bereich des Basisträgers (1) derart aus der Hauptebene (H) herausgeformt ist, dass ein Strukturelement (41-43, 44a, 44b, 45-48) der Trägervorrichtung ausgebildet ist.

14. Trägervorrichtung nach Anspruch 13, **dadurch gekennzeichnet, dass** die Trägervorrichtung einen Bereich aufweist, in dem mehrere Strukturelemente (45, 46, 47) angeordnet sind, insbesondere eine Vielzahl periodisch oder nach einem vorgegeben Muster angeordneter Strukturelemente (45, 46, 47), um die Steifigkeit der Trägervorrichtung gezielt zu beeinflussen und/oder um eine auf die Trägervorrichtung wirkende mechanische Energie abzubauen, und somit einem Versagen der Trägervorrichtung entgegenzuwirken.

15. Verfahren zur Herstellung einer Trägervorrichtung für Funktionselemente eines Kraftfahrzeuges, insbesondere einer Trägervorrichtung nach einem der Ansprüche 1 bis 14, wobei ein Basisträger (1), der zu einem wesentlichen Teil durch ein Organoblech gebildet ist und der sich entlang einer Hauptebene (H) erstreckt, bereitgestellt wird,
**dadurch gekennzeichnet, dass**
- in dem Organoblech (O) des Basisträgers (1) wenigstens eine Auftrennung in einem ursprünglich durchgängigen Bereich des Organoblechs (O) ausgebildet wird,
- an der Auftrennung ein Materialbereich (12, 12a, 12b) unter Bildung wenigstens eines Freiraums (13, 13, 14, 14, 15a, 15b, 18, 18a, 18b) aus der Hauptebene (H) heraus geformt wird, so dass der herausgeformte Materialbereich (12, 12a, 12b) mit wenigstens einem Abschnitt zu einem angrenzenden Bereich des Basisträgers (1) beabstandet ist und zumindest teilweise von der Hauptebene (H) vorsteht, und
- der wenigstens eine Freiraum (13, 13, 14, 14, 15a, 15b, 18, 18a, 18b) zumindest teilweise derart mit a) einer Anspritzung aus thermoplastischem Kunststoffmaterial (21, 21a, 21b, 22, 23, 23a, 23b, 242, 243) oder b) einer Anspritzung aus thermoplastischem Kunststoffmaterial (21, 21a, 21b, 22, 23, 23a, 23b, 242, 243) und einem separaten Einsatzelement (33, 34) gefüllt wird, dass der Abschnitt des herausgeformten Materialbereichs (12, 12a, 12b) und der angrenzende Bereich hierüber miteinander verbunden sind.

## Claims

1. A carrier device for a motor vehicle having a base carrier (1) which is substantially formed by an organo sheet and which extends along a main plane (H),
**characterized in that**
the organo sheet (0) of the base carrier (1) has at least one separation on which a material region (12, 12a, 12b) is molded out from the main plane (H) while forming at least one free space (13, 14, 15a, 15b, 18, 18a, 18b), such that said material region (12, 12a, 12b) is spaced apart from an adjacent region of the base carrier (1) by at least one portion and at least partially protrudes from the main plane (H), wherein the at least one free space (13, 14, 15a, 15b, 18, 18a, 18b) is at least partially filled
a) with an injection (21, 21a, 21b, 22, 23, 23a, 23b, 242, 243) of thermoplastic material or
b) with an injection (21, 21a, 21b, 22, 23, 23a, 23b, 242, 243) of thermoplastic material and a separate insert element (33, 34),
such that the portion of the molded-out material region (12, 12a, 12b) and the adjacent region are connected to one another thereby.

2. The carrier device as claimed in claim 1, **characterized in that** the at least one free space (13, 14, 15a, 15b, 18, 18a, 18b) is defined by at least two edges (131, 132, 141, 142, 16a, 152a, 16b, 11, 181-182b) spaced apart from one another.

3. The carrier device as claimed in claim 2, **characterized in that** the at least two edges of the at least one free space (13, 14, 18, 18a, 18b) are formed by adjacent edges (131, 132, 141, 142, 181-182b) of the separation and are spaced apart from one another at least transversely to the main plane (H).

4. The carrier device as claimed in claim 2, **characterized in that** at least one edge of the at least one free space (15a, 15b) is formed by a folded edge (16a, 16b) which is formed by molding-out the material region (12a, 12b).

5. The carrier device as claimed in at least one of the preceding claims, **characterized in that**
- the at least one separation is configured by rolling, pressing, cutting, punching, deep-drawing and/or stamping in the base carrier (1), and/or
- the at least one separation is provided on the outer edge (11) of the base carrier (1) and/or
- the at least one separation is arranged spaced apart from the outer edge (11) of the base carrier (1).

6. The carrier device as claimed in at least one of the preceding claims, **characterized in that** the at least one free space (13, 13, 14, 14, 15a, 15b, 18, 18a, 18b) is sealingly closed by the injection (21, 21a, 21b, 22, 23, 23a, 23b, 242, 243) and/or by the separate insert element (33, 34) and/or the injection and/or the separate insert element (33, 34) forms an interface for attaching and/or supporting at least one functional element to be secured to the carrier device, in particular of a reinforcing element, a crash element, an element of a drive device, an element of a guide device and/or a locking device.

7. The carrier device as claimed in at least one of the preceding claims, **characterized in that** the injection (21, 21a, 21b, 22, 23, 23a, 23b, 242, 243) forms a deformation element of the carrier device which is configured at least partially to dissipate mechanical energy acting on the carrier device by deformation and/or
- forms a reinforcement between the material region (12, 12a, 12b) and the adjacent region (132, 142, 152a, 152b, 17-173, 182, 182a, 182b) of the base carrier (1).

8. The carrier device as claimed in at least one of the preceding claims, **characterized in that** the injection (23) completely covers at least one surface of the molded-out material region (12, 12a, 12b) so that injected thermoplastic material extends over a wall formed by the molding-out and at least partially bordered by the at least one free space and in this case partially or entirely fills the free space.

9. The carrier device as claimed in at least one of the preceding claims, **characterized in that** the separate insert element (33, 34) is produced from a metal material, in particular from light metal or sheet metal, and/or the separate insert element (33, 34) is connected to the base carrier by adhesive bonding, ultrasonic welding, riveting, screwing and/or encapsulation by thermoplastic injection-molding.

10. The carrier device as claimed in at least one of the preceding claims, **characterized in that** the base carrier (1) comprises a plurality of separations.

11. The carrier device as claimed in claim 10, **characterized in that** the base carrier (1) comprises at least two separations and in addition to the material region (12, 12a, 12b) molded out from the main plane (H) comprises at least one further material region (12, 12a, 12b) molded out from the main plane (H) or the material region (12, 12a, 12b) adjoins a plurality of separations and is molded out from the main plane (H), forming at least one free space (13, 14, 18, 18a, 18b).

12. The carrier device as claimed in at least one of the preceding claims, **characterized in that** the material region (12, 12a, 12b) is molded out from the main plane (H) such that a tab-like structure is formed and/or a channel (17) is formed in the base carrier (1) and the material region (12) is molded out from the main plane (H) in the region of the channel (17).

13. The carrier device as claimed in at least one of the preceding claims, **characterized in that** the material region (12) and/or a region of the base carrier (1) adjacent thereto is molded out from the main plane (H) such that a structural element (41-43, 44a, 44b, 45-48) of the carrier device is formed.

14. The carrier device as claimed in claim 13, **characterized in that** the carrier device comprises a region in which a plurality of structural elements (45, 46, 47) are arranged, in particular a plurality of structural elements (45, 46, 47) arranged periodically or according to a predetermined pattern, in order to influence in a specific manner the stiffness of the carrier device and/or in order to dissipate mechanical energy acting on the carrier device and thus to counteract a malfunction of the carrier device.

15. A method for producing a carrier device for functional elements of a motor vehicle, in particular of a carrier device as claimed in one of claims 1 to 14, wherein a base carrier (1) which is substantially formed by an organo sheet and which extends along a main plane (H) is provided,
**characterized in that**
- at least one separation is formed in the organo sheet (O) of the base carrier (1) in a region of the organo sheet (O) which was originally continuous,
- a material region (12, 12a, 12b) is molded out from the main plane (H) on the separation, forming at least one free space (13, 13, 14, 14, 15a, 15b, 18, 18a, 18b), such that the molded-out material region (12, 12a, 12b) is spaced apart from an adjacent region of the base carrier (1) by at least one portion and at least partially protrudes from the main plane (H), and
- the at least one free space (13, 13, 14, 14, 15a, 15b, 18, 18a, 18b) is at least partially filled with an injection of thermoplastic material (21, 21a, 21b, 22, 23, 23a, 23b, 242, 243) and/or with a separate insert element (33, 34), such that the portion of the molded-out material region (12, 12a, 12b) and the adjacent region are connected to one another thereby.

## Revendications

1. Système de support pour un véhicule automobile, avec un support de base (1), qui est formé pour l'essentiel par une tôle organique et qui s'étend le long d'un plan principal (H),
**caractérisé en ce que**
la tôle organique (O) du support de base (1) présente au moins une séparation, au niveau de laquelle une zone de matière (12, 12a, 12b) fait saillie du plan principal (H) en formant au moins un espace libre (13, 14, 15a, 15b, 18, 18a, 18b), de sorte que cette zone de matière (12, 12a, 12b) est espacée avec au moins une section d'une zone adjacente du support de base (1) et dépasse au moins en partie du plan principal (H), dans lequel l'au moins un espace libre (13, 14, 15a, 15b, 18, 18a, 18b) est rempli au moins en partie avec
a) un moulage par injection (21, 21a, 21b, 22, 23, 23a, 23b, 242, 243) en matière plastique thermoplastique ou
b) un moulage par injection (21, 21a, 21b, 22, 23, 23a, 23b, 242, 243) en matière plastique thermoplastique et un élément d'insertion séparé (33, 34)
de sorte que la section de la zone de matière (12, 12a, 12b) en saillie et la zone adjacente sont reliées l'une à l'autre par ce biais.

2. Système de support selon la revendication 1, **caractérisé en ce que** l'au moins un espace libre (13, 14, 15a, 15b, 18, 18a, 18b) est délimité par au moins deux bords espacés l'un de l'autre (131, 132, 141, 142, 16a, 152a, 16b, 11, 181-182b).

3. Système de support selon la revendication 2, **caractérisé en ce que** les au moins deux bords de l'au moins un espace libre (13, 14, 18, 18a, 18b) sont formés par des bords adjacents (131, 132, 141, 142, 181-182b) de la séparation et sont espacés l'un de l'autre au moins transversalement au plan principal (H).

4. Système de support selon la revendication 2, **caractérisé en ce qu'**au moins un bord de l'au moins un espace libre (15a, 15b) est formé par un bord de pliage (16a, 16b), qui est formé par une saillie de la zone de matière (12a, 12b).

5. Système de support selon au moins l'une quelconque des revendications précédentes, **caractérisé en ce que**
- l'au moins une séparation est réalisée par laminage, pressage, découpe, estampage, emboutissage et/ou poinçonnage dans le support de base (1) et/ou
- l'au moins une séparation est prévue au niveau du bord extérieur (11) du support de base (1) et/ou
- l'au moins une séparation est agencée à distance du bord extérieur (11) du support de base (1).

6. Système de support selon au moins l'une quelconque des revendications précédentes, **caractérisé en ce que** l'au moins un espace libre (13, 13, 14, 14, 15a, 15b, 18, 18a, 18b) est fermé de manière étanche par le moulage par injection (21, 21a, 21b, 22, 23, 23a, 23b, 242, 243) et/ou par l'élément d'insertion séparé (33, 34) et/ou le moulage par injection et/ou l'élément d'insertion séparé (33, 34) forme une interface pour le raccordement et/ou le soutien pour au moins un élément fonctionnel à fixer au niveau du système de support, en particulier d'un élément de rigidification, d'un élément de collision, d'un élément d'un dispositif d'entraînement, d'un élément d'un dispositif de guidage et/ou d'un dispositif de verrouillage.

7. Système de support selon au moins l'une quelconque des revendications précédentes, **caractérisé en ce que** le moulage par injection (21, 21a, 21b, 22, 23, 23a, 23b, 242, 243) forme un élément de déformation du système de support, lequel est réalisé pour évacuer au moins en partie par déformation une énergie mécanique agissant sur le dispositif de support et/ou
- une rigidification entre la zone de matière (12, 12a, 12b) et la zone adjacente (132, 142, 152a, 17-173, 182, 182a, 182b) du support de base (1).

8. Système de support selon au moins l'une quelconque des revendications précédentes, **caractérisé en ce que** le moulage par injection (23) recouvre complètement au moins une surface de la zone de matière (12, 12a, 12b) en saillie, de sorte que la matière plastique thermoplastique moulée par injection s'étend sur une paroi formée par la saillie et bordée au moins en partie par l'au moins un espace libre et remplit ce faisant en partie ou complètement l'espace libre.

9. Système de support selon au moins l'une quelconque des revendications précédentes, **caractérisé en ce que** l'élément d'insertion séparé (33, 34) est fabriqué en un matériau métallique, en particulier en métal léger ou tôle, et/ou l'élément d'insertion séparé (33, 34) est relié au support de base par collage, soudage par ultrasons, rivetage, vissage et/ou surmoulage thermoplastique.

10. Système de support selon au moins l'une quelconque des revendications précédentes, **caractérisé en ce que** le support de base (1) présente plusieurs séparations.

11. Système de support selon la revendication 10, **caractérisé en ce que** le support de base (1) présente au moins deux séparations et présente à côté de la zone de matière (12, 12a, 12b) en saillie du plan principal (H) au moins une autre zone de matière (12, 12a, 12b) en saillie du plan principal (H) ou la zone de matière (12, 12a, 12b) est adjacente aux plusieurs séparations et fait saillie du plan principal (H) en formant au moins un espace libre (13, 14, 18, 18a, 18b).

12. Système de support selon au moins l'une quelconque des revendications précédentes, **caractérisé en ce que** la zone de matière (12, 12a, 12b) fait saillie du plan principal (H) de sorte qu'une structure de type patte est réalisée et/ou un canal (17) est réalisé dans le support de base (1) et la zone de matière (12) fait saillie du plan principal (H) dans la zone du canal (17).

13. Système de support selon au moins l'une quelconque des revendications précédentes, **caractérisé en ce que** la zone de matière (12) et/ou une zone adjacente à celle-ci du support de base (1) fait saillie du plan principal (H) de sorte qu'un élément structurel (41-43, 44a, 44b, 45-48) du système de support est formé.

14. Système de support selon la revendication 13, **caractérisé en ce que** le système de support présente une zone, dans laquelle plusieurs éléments structurels (45, 46, 47) sont agencés, en particulier une pluralité d'éléments structurels (45, 46, 47) agencés périodiquement ou selon un motif prédéfini, pour influencer de manière ciblée la rigidité du système de support et/ou pour évacuer une énergie mécanique agissant sur le système de support, et ainsi contrecarrer une défaillance du système de support.

15. Procédé de production d'un système de support pour éléments fonctionnels d'un véhicule automobile, en particulier d'un système de support selon l'une quelconque des revendications 1 à 14, dans lequel un support de base (1), qui est formé pour l'essentiel par une tôle organique et qui s'étend le long d'un plan principal (H), est mis à disposition
**caractérisé en ce que**
- dans la tôle organique (O) du support de base (1), au moins une séparation est réalisée dans une zone initialement continue de la tôle organique (O),
- au niveau de la séparation, une zone de matière (12, 12a, 12b) fait saillie du plan principal (H) en formant au moins un espace libre (13, 13, 14, 14, 15a, 15b, 18, 18a, 18b), de sorte que la zone de matière (12, 12a, 12b) en saillie est espacée avec au moins une section d'une zone adjacente du support de base (1) et dépasse au moins en partie du plan principal (H), et
- l'au moins un espace libre (13, 13, 14, 14, 15a, 15b, 18, 18a, 18b) est rempli au moins en partie avec a) un moulage par injection en matière plastique thermoplastique (21, 21a, 21b, 22, 23, 23a, 23b, 242, 243) ou b) un moulage par injection en matière plastique thermoplastique (21, 21a, 21b, 22, 23, 23a, 23b, 242, 243) et un élément d'insertion séparé (33, 34), de sorte que la section de la zone de matière (12, 12a, 12b) en saillie et la zone adjacente sont reliées l'une à l'autre par ce biais.
